# EUROPEAN PATENT APPLICATION

(11) **EP 4 096 282 A1**
(43) Date of publication of application: **30.11.2022**
(21) Application number: 21744881.0
(22) Date of filing: 20.01.2021
(51) Int. Cl.: H04W 24/10, H04W 72/04, H04W 72/12

(54) **INFORMATION REPORTING METHOD, TERMINAL DEVICE, AND NETWORK-SIDE DEVICE**

(30) Priority: 23.01.2020 CN 202010076949
(71) Applicant: Vivo Mobile Communication Co., Ltd., Dongguan, Guangdong 523863 (CN)
(72) Inventor: YANG, Yu, Dongguan, Guangdong 523863 (CN); SUN, Peng, Dongguan, Guangdong 523863 (CN)
(74) Representative: Raffay & Fleck
(86) International application number: PCT/CN2021/072905
(87) International publication number: WO 2021/147913

(57) **Abstract**

Disclosed are an information reporting method, a terminal device, and a network-side device. The information reporting method is applied to the terminal device, and comprises: sending reporting information to a network side, wherein the reporting information indicates related information of at least one spatial object of the terminal device.

## Description

### CROSS-REFERENCE TO RELATED APPLICATIONS

This application claims priority to Chinese Patent Application No. 202010076949.5, filed in China on January 23, 2020, which is incorporated herein by reference in its entirety.

### TECHNICAL FIELD

The present invention relates to the wireless communications field, and in particular, to an information reporting method, a terminal device, and a network-side device.

### BACKGROUND

Radio access technologies such as long term evolution (Long Term Evolution, LTE)/LTE-advanced (LTE-Advanced, LTE-A) are built based on multiple-input multiple-output (Multiple-Input Multiple-Output, MIMO) and orthogonal frequency division multiplexing (Orthogonal Frequency Division Multiplexing, OFDM) technologies. In the MIMO technology, spatial freedom achieved by a multi-antenna system is used to improve a peak rate and system spectrum utilization.

In a 5G mobile communications system, a massive MIMO technology with more antenna ports is introduced. In the massive (Massive) MIMO technology, massive antenna arrays are used to improve system band utilization and support a larger number of access users. In the massive MIMO technology, to reduce implementation costs and device complexity, a digital-analog hybrid beamforming technology is used. To be specific, on the basis of conventional digital domain beamforming, additional beamforming is performed on radio frequency signals near a front end of an antenna system. With analog beamforming, transmit signals and channels can be roughly matched in a relatively simple manner.

Analog beamforming is based on full-bandwidth transmission, and an antenna element of each polarization direction on a panel of each antenna array can transmit analog beams only in a time-division multiplexing manner. Currently, a polling manner is usually used for training of analog beamforming vectors. To be specific, the antenna element of each polarization direction of each antenna panel transmits a training signal (namely, a candidate beamforming vector) sequentially at appointed times in a time-division multiplexing manner. A terminal feeds back beam reporting (beam reporting) after measurement, so that a network-side device can use the training signal to implement analog beam transmission for next service transmission.

During beam measurement, the network-side device configures a reference signal resource set (RS resource set), including at least one reference signal resource such as a synchronization signal and physical broadcast channel (Physical Broadcast Channel, PBCH) block (Synchronization Signal and PBCH block, SSB) resource (resource) or a channel state information (Channel State Information, CSI) reference signal (CSI reference signal, CSI-RS) resource. User equipment (User Equipment, UE) measures a layer 1-reference signal received power (Reference Signal Received Power, L1-RSRP)/layer 1-signal to interference plus noise ratio (Layer 1-Signal to Interference plus Noise Ratio, L1-SINR) of each RS resource, and reports a beam report to the network-side device. Reported content includes an SSB resource index (SSB Resource Index, SSBRI) or a CSI-RS resource index (CSI-RS Resource Index, CRI) and the L1-RSRP/L1-SINR. Content of the report reflects an RS resource corresponding to at least one optimal beam and quality thereof, which are used for the network to determine a beam used to transmit a channel or a signal to the UE.

In the foregoing beam reporting manner, the network-side device can determine only a beam for transmitting a channel or a signal to the UE, but cannot schedule a spatial object of the UE.

### SUMMARY

An objective of embodiments of the present invention is to provide an information reporting method, a terminal device, and a network-side device, to report related information of at least one spatial object of UE to a network-side device, so that the network-side device schedules a spatial object of the UE.

According to a first aspect, an information reporting method is provided, applied to a terminal device and including: transmitting report information to a network-side device, where the report information indicates related information of at least one spatial object of the terminal device.

According to a second aspect, a spatial object scheduling method is provided, applied to a network-side device and including: receiving report information transmitted by a terminal device, where the report information indicates related information of at least one spatial object of the terminal device; and scheduling a spatial object of the terminal device based on the related information of the at least one spatial object that is indicated by the report information.

According to a third aspect, a terminal device is provided, including: a transmitting module, configured to transmit report information to a network-side device as defined in a protocol and/or as configured by the network-side device and/or in the case of detecting a reporting event, where the report information indicates related information of at least one spatial object of the terminal device.

According to a fourth aspect, a network-side device is provided, including: a receiving module, configured to receive report information transmitted by a terminal device, where the report information indicates related information of at least one spatial object of the terminal device; and a scheduling module, configured to schedule a spatial object of the terminal device based on the related information of the at least one spatial object that is indicated by the report information.

According to a fifth aspect, a terminal device is provided, including a memory, a processor, and a computer program stored in the memory and capable of running on the processor, where when the computer program is executed by the processor, the steps of the method according to the first aspect are implemented.

According to a sixth aspect, a network-side device is provided, including a memory, a processor, and a computer program stored in the memory and capable of running on the processor, where when the computer program is executed by the processor, the steps of the method according to the second aspect are implemented.

According to a seventh aspect, a computer-readable storage medium is provided, where the computer-readable storage medium stores a computer program, and when the computer program is executed by a processor, the steps of the method according to the first aspect or the second aspect are implemented.

In the embodiments of the present invention, a terminal device transmits report information to a network-side device as defined in a protocol and/or as configured by the network-side device and/or in the case of detecting a reporting event, where the report information indicates related information of at least one spatial object of the terminal device, so that the network-side device may learn of the related information of the at least one spatial object of the terminal device, and therefore may subsequently schedule a spatial object of the terminal device based on the related information of the at least one spatial object of the terminal device.

### BRIEF DESCRIPTION OF DRAWINGS

The accompanying drawings described herein are intended for better understanding of the present invention, and constitute a part of the present invention. Example embodiments of the present invention and descriptions thereof are intended to explain the present invention, but do not constitute any inappropriate limitation on the present invention. In the accompanying drawings:
FIG. 1 is a schematic flowchart of an information reporting method according to an embodiment of this application;
FIG. 2 is another schematic flowchart of an information reporting method according to an embodiment of this application;
FIG. 3 is still another schematic flowchart of an information reporting method according to an embodiment of this application;
FIG. 4 is still another schematic flowchart of an information reporting method according to an embodiment of this application;
FIG. 5 is still another schematic flowchart of an information reporting method according to an embodiment of this application;
FIG. 6 is a schematic flowchart of a spatial object scheduling method according to an embodiment of this application;
FIG. 7 is a schematic structural diagram of a terminal device according to an embodiment of this application;
FIG. 8 is a schematic structural diagram of a network-side device according to an embodiment of this application;
FIG. 9 is a schematic structural diagram of user equipment according to an embodiment of this application; and
FIG. 10 is a structural diagram of a network-side device according to an embodiment of this application.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, for example, a global system for mobile communications (Global System for Mobile Communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, an LTE/LTE-A system, and a new radio (New Radio, NR) system.

UE may also be referred to as a mobile terminal (Mobile Terminal), mobile user equipment, a terminal device, or the like, and may communicate with one or more core networks through a radio access network (Radio Access Network, RAN). The user equipment may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network.

A base station may be a base transceiver station (Base Transceiver Station, BTS) in GSM or CDMA, a NodeB (NodeB) in WCDMA, an evolved NodeB (evoled NodeB, eNB or e-NodeB) in LTE, or a 5G NodeB (gNB). This is not limited in the present invention. However, for ease of description, the following embodiments are described by using the gNB as an example.

The technical solutions provided in the embodiments of the present invention are described in detail below with reference to the accompanying drawings.

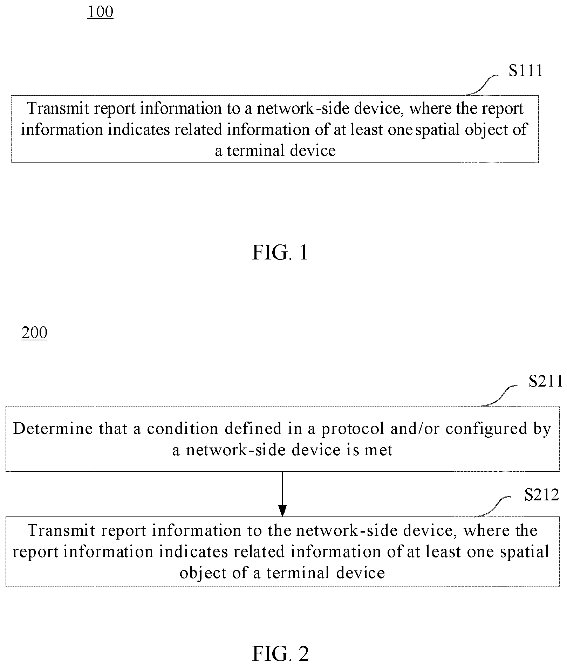

FIG. 1 is a schematic flowchart of an information reporting method according to an embodiment of this application. The method may be performed by a terminal device. To be specific, the method 100 may be performed by software or hardware installed on the terminal device. As shown in FIG. 1, the method may include the following steps.

S111: Transmit report information to a network-side device, where the report information indicates related information of at least one spatial object of the terminal device.

The transmitting, by the terminal device, report information to a network-side device includes at least one of the following:
transmitting the report information to the network-side device as defined in a protocol;
transmitting the report information to the network-side device according to an configuration of the network-side device; and
transmitting the report information to the network-side device in the case of detecting a reporting event.

The spatial object of the terminal device includes but is not limited to an antenna panel of the terminal device and/or a beam on the antenna panel of the terminal device. The antenna panel of the terminal device may form different beams by adjusting a phase and an amplitude of each antenna element on the antenna panel of the terminal device.

In actual application, an antenna panel and/or a beam currently used by the terminal device may need to be switched to another antenna panel and/or beam for a specific reason. Therefore, in this embodiment, the terminal device indicates the related information of the at least one spatial object of the terminal device by using the report information, so that the network-side device can learn of the related information of the spatial object of the terminal device. If the terminal device switches a spatial object, the network-side device and the UE can have the same understanding of the spatial object, and the network-side device may further schedule a spatial object of the UE based on reported related information of the spatial object of the UE.

The at least one spatial object may include a target spatial object to be switched to.

In an optional implementation, the UE may perform measurement before transmitting the report information, and then transmit the report information to the network-side device based on a measurement result. The measurement result includes at least one of the following: a plurality of first measurement results obtained by measuring, by using different spatial objects, a beam reference signal transmitted on a preset reference signal (Reference Signal, RS) resource; a second measurement result obtained by measuring a movement speed of the terminal device; and a third measurement result obtained by measuring a distance between the antenna panel currently used by the terminal device and a human body. During reporting, the UE may select a beam corresponding to one or more measurement results that meet a predetermined condition (for example, with the best beam quality) as a target beam, and report related information of the target beam. For example, a spatial object for measuring the target beam, beam link quality of the target beam, and an RS resource corresponding to the target beam are reported. Alternatively, the UE determines, based on the second measurement result or the third measurement result, whether to switch a currently used spatial object, and reports related information of the currently used spatial object or a target spatial object to be switched to. This is not specifically limited in the embodiments of the present invention

The reporting event includes but is not limited to a beam failure event, and certainly, is not limited thereto, and may alternatively be another event. For example, the network-side device indicates to perform beam measurement, and the report information may be transmitted after beam measurement is performed.

A possible implementation of which the report information indicates the related information of the at least one spatial object is: the report information includes identification information of the at least one spatial object. To be specific, in this possible implementation, the terminal device adds, to the report information, identification information of a spatial object that needs to be reported, and reports the report information to the network-side device, so that the network-side device can learn of the identification information of the corresponding spatial object.

Alternatively, the related information of the at least one spatial object may be indicated in an implicit manner. For example, the related information of the at least one spatial object may be indicated by other information included in the report information, or the related information of the at least one spatial object may be indicated in an arrangement order of other information included in the report information, or may be indicated by an uplink resource carrying the report information.

For example, in a possible implementation, a correspondence between uplink resources and spatial objects of the terminal device may be preconfigured. In this case, when transmitting the report information, the terminal device transmits the report information by using an uplink resource corresponding to the at least one spatial object to be reported, to indicate the at least one spatial object, meaning that the spatial object corresponding to the uplink resource for transmitting the report information is the at least one spatial object reported by the UE. For example, a panel (antenna panel) 1 of the terminal device is preconfigured to use an uplink resource A, and a panel 2 of the terminal device is preconfigured to use an uplink resource B. If the UE currently reports related information of the panel 1, the UE transmits report information on the uplink resource A.

In this embodiment of the present invention, the report information may include one of the following related information of the at least one spatial object: identification information of at least one RS resource corresponding to the at least one spatial object, a quality parameter of the at least one RS resource, a duty cycle (duty cycle) corresponding to the at least one spatial object, and a reduction value of the quality parameter of the at least one RS resource.

A correspondence between spatial objects and RS resources may be that a spatial object and an RS resource correspond to the same measurement result in the first measurement result. To be specific, during beam measurement, a specific RS resource is measured by using a specific spatial object, to obtain a first measurement result, where the spatial object and the RS resource have a correspondence. If the first measurement result meets the predetermined condition, the UE may indicate, in the report information, related information of a spatial object (namely, the at least one spatial object) for performing measurement to obtain the first measurement result, and the report information may include identification information of an RS resource corresponding to the first measurement result, namely, the identification information of the at least one RS resource corresponding to the at least one spatial object. For example, the network configures four RS resources: A, B, C, and D. The UE separately measures the RS resources by using the panel 1 and the panel 2, and determines that the report information needs to include indexes of the RS resources A and C. In addition, during measurement of the RS resource A, better quality is achieved by using the panel 1, and during measurement of the RS resource C, better quality is achieved by using the panel 2. In this case, the report information further includes identification information of the panel 1 corresponding to the RS resource A and identification information of the panel 2 corresponding to the RS resource C.

The at least one RS resource includes but is not limited to a CSI-RS resource and/or an SSB resource. Correspondingly, the identification information of the RS resource includes but is not limited to a CSI-RS resource index (CSI-RS Resource Indicator, CRI) and/or an SSB resource index (SSBRI). The quality parameter of the RS resource includes but is not limited to an L1-RSRP and/or an L1-SINR.

In an optional implementation, in a case that the network-side device configures a corresponding spatial object for measuring each RS resource and the report information includes the identification information of the at least one RS resource, the identification information of the at least one spatial object may be indicated by the identification information of the at least one RS resource. For example, the network-side device configures to measure the RS resource A by using the panel 1 and measure the RS resource B by using the panel 2. If the UE determines, based on a measurement result, to report the RS resource A on the panel 1, the UE may add only identification information of the RS resource A to the report information. After receiving the report information, the network-side device may determine that the RS resource A corresponding to the panel 1 is reported by the UE.

Alternatively, in another optional implementation, an arrangement order for reporting related information of all spatial objects of the terminal device may be configured by the network-side device or predefined, and the related information of the at least one spatial object that is included in the report information is arranged in the arrangement order, to indicate the corresponding related information of the at least one spatial object. For example, a reporting order, configured by the network-side device, of related information of spatial objects is: a beam A on the panel 1, a beam B on the panel 1, a beam A on the panel 2, and a beam B on the panel 2. In this case, an arrangement order of the related information in the report information is: identification information CRI 1 of an RS resource R1 corresponding to the beam A on the panel 1, a quality parameter L1-RSRP 1 of the RS resource R1 corresponding to the beam A on the panel 1, identification information CRI 2 of an RS resource R2 corresponding to the beam B on the panel 1, a quality parameter L1-RSRP 2 of the RS resource R2 corresponding to the beam B on the panel 1, a quality parameter L1-RSRP 3 of an RS resource R3 corresponding to the beam A on the panel 2, identification information CRI 4 of an RS resource R4 corresponding to the beam B on the panel 2, and a quality parameters L1-RSRP 4 of the RS resource R4 corresponding to the beam B on the panel 2.

In an optional implementation, whether the UE reports the related information indicating the at least one spatial object during reporting may be determined as configured by the network-side device. The configuration by the network-side device may include: forcing the terminal device to indicate the related information of the at least one spatial object when the terminal device reports the report information. In this case, regardless of whether the spatial object currently used by the UE needs to be switched, when transmitting the report information to the network-side device, the UE indicates the related information of the at least one spatial object, for example, the related information of the currently used spatial object. Alternatively, the configuration by the network-side device may include: allowing the terminal device to indicate the related information of the at least one spatial object when the terminal device reports the report information. In this case, the UE may transmit the related information indicating the at least one spatial object, for example, the related information of the target spatial object to be switched to, in a case that the spatial object currently used by the UE needs to be switched.

In an optional implementation, the transmitting the report information by the UE may be conventional reporting. In this optional implementation, the transmitting report information to a network-side device may include:
in a case that a condition defined in the protocol and/or configured by the network-side device is met, transmitting the report information to the network-side device, for example, the protocol defines and/or the network-side device configures periodic reporting (for example, periodic reporting of a P-MPR corresponding to a spatial object), or the protocol defines and/or the network-side device configures that the UE performs reporting when switching the currently used spatial object; or
when a power management maximum power reduction (Power Management Maximum Power Reduction, P-MPR) of the currently used antenna panel and/or a P-MPR of the currently used beam meet(s) a preset condition, transmitting the report information to the network-side device. For example, reporting is performed when the P-MPR of the currently used spatial object is less than or greater than a preset value (the preset value may be configured by the network-side device, for example, 5 db).

Optionally, in the foregoing optional implementation, the report information may include the P-MPR of the currently used antenna panel, and/or a P-MPR of another antenna panel, and/or a P-MPR of at least one beam on the currently used antenna panel.

In this embodiment of the present invention, the UE may transmit the report information by using different spatial objects, add the report information onto different channels, and transmit the report information in different forms based on actual application. The following separately describes these aspects.

In an optional implementation, the transmitting report information to a network-side device may include: transmitting, depending on whether a first predetermined condition is met, the report information to the network-side device by using the currently used spatial object or another spatial object of terminal device different from the spatial object. The another spatial object may be another spatial object to be switched to.

That whether a first predetermined condition is met may include at least one of the following:
(1) Whether a quality parameter obtained by measuring a reference signal by using different spatial objects of the terminal device meets a second predetermined condition. For example, it may be determined whether a difference between quality parameters that is obtained by measuring a reference signal by using different spatial objects of the terminal device is less than a predetermined threshold. If yes, it indicates that beam transmission of the currently used spatial object is not seriously blocked, beam link quality is close to that of another spatial object, and the report information may still be transmitted by using the currently used spatial object; or if switching is required, the report information may alternatively be transmitted by using the target spatial object to be switched to. If the difference between quality parameters that is obtained by measuring a reference signal by using different spatial objects of the terminal device is not less than the predetermined threshold, it indicates that beam transmission of the currently used spatial object is seriously blocked, beam link quality of another spatial object is better, and switching is required. Therefore, the report information needs to be transmitted on the another spatial object (for example, the target spatial object to be switched to).
(2) Whether a link quality degradation value on the currently used spatial object meets a third predetermined condition within a predetermined time period. For example, it may be determined whether a link quality degradation value on the currently used spatial object is less than a predetermined value. If yes, the currently used spatial object may still be used, and therefore the report information may be transmitted by using the currently used spatial object. Alternatively, if there is another condition indicating that switching is required, the report information may alternatively be transmitted on the target spatial object to be switched to. If the link quality degradation value on the currently used spatial object is not less than the predetermined value, it indicates that link quality degradation of the currently used spatial object is serious, and the currently used spatial object can no longer be used. In this case, the UE may determine the target spatial object to be switched to, and transmit the report information on the target spatial object; or the UE may transmit the report information by using another spatial object, and the network-side device selects, based on the information reported by the UE, the target spatial object to be switched to.
(3) Whether a P-MPR of a spatial object of the terminal device meets a fourth predetermined condition. In specific application, an electromagnetic wave output by the terminal device may affect the human body. A specific absorption rate (Specific Absorption Rate, SAR) may be used as an indicator for indicating energy received by the human body within a specific period of time from a device that transmits a radio wave. An SAR allowed by the human body is stipulated in a protocol. If the electromagnetic wave output by the terminal device exceeds the SAR, for example, when the terminal device is close to the human body, a transmit power of the terminal device needs to be reduced, which is power reduction. A P-MPR indicates a power value that needs to be reduced. For example, if the P-MPR of the spatial object currently used by the UE exceeds a predetermined value, it indicates that the currently used spatial object is close to the human body, and the currently used spatial object needs to be switched. In this case, the report information may be transmitted by using the switched-to target spatial object.

Optionally, that whether a P-MPR of a spatial object of the terminal device meets a fourth predetermined condition includes one of the following:

Whether the P-MPR of the currently used spatial object exceeds a first quality difference, where the first quality difference includes a difference between beam link quality on the currently used spatial object and beam link quality on the another spatial object. If the P-MPR does not exceed the first quality difference, it indicates that the beam link quality of the currently used spatial object is good, and after power reduction, is still close to the beam link quality on the another spatial object, and the report information may be transmitted by using the currently used spatial object. If the P-MPR exceeds the first quality difference, it indicates that the beam link quality of the currently used spatial object after reduction is not as good as that of the another spatial object. In this case, the report information may be transmitted by using the another spatial object (for example, the target space object to be switched to). For example, the currently used spatial object is the panel 1, whose beam link quality is 10 db higher than that of the panel 2, and a P-MPR of the panel 1 is 5 db, which is less than 10 db. In this case, the report information is transmitted by using the panel 1.

Whether the P-MPR of the currently used spatial object exceeds a predetermined threshold within a predetermined time range. If the P-MRP of the currently used spatial object exceeds the predetermined threshold (for example, 8 db), it indicates that the currently used spatial object is close to the human body, and the report information is transmitted by using the another spatial object; or if the P-MRP does not exceed the predetermined threshold, the report information may be still transmitted by using the currently used spatial object.

Whether a P-MPR difference exceeds a second quality difference, where the P-MPR difference is a difference between the P-MPR of the currently used spatial object and a P-MPR of the another spatial object, and the second quality difference is a difference between beam link quality on the currently used spatial object and beam link quality on the another spatial object. If the P-MPR difference exceeds the second quality difference, the report information may be transmitted by using the another spatial object. If the P-MPR does not exceed the second quality difference, the report information may be transmitted by using the currently used spatial object. Alternatively, if there is another condition indicating that switching is required, the report information may alternatively be transmitted on the target spatial object to be switched to. For example, beam link quality of the currently used panel 1 is 10 db higher than beam link quality of the panel 2, a P-MPR of the panel 1 is 20 db, a P-MPR of the panel 2 is 2 db, and a P-MPR difference is 18 db. In this case, the report information may be transmitted by using the another spatial object (for example, the target spatial object to be switched to).

(4) Whether uplink quality and downlink quality on the currently used spatial object meet a fifth predetermined condition, for example, whether a fading value of the uplink quality on the currently used spatial object compared with the downlink quality is less than a predetermined value. If the fading value is not less than the predetermined value, uplink fading on the current spatial object is large, and the report information may be transmitted by using the another spatial object (for example, the target spatial object to be switched to). If the fading value is less than the predetermined value, the report information may be transmitted by using the currently used spatial object. Alternatively, if there is another condition indicating that switching is required, the report information may alternatively be transmitted on the target spatial object to be switched to.

(5) Whether a movement speed of the terminal device meets a sixth predetermined condition, for example, whether the movement speed of the terminal device exceeds a preset threshold. If the movement speed exceeds the preset threshold, the report information may be transmitted by using the another spatial object. If the movement speed does not exceed the preset threshold, the report information may be transmitted by using the currently used spatial object.

In this embodiment of the present invention, the UE may select a different uplink resource to transmit the report information. For example, in an optional implementation, the UE may transmit the report information to the network-side device through a preset physical uplink control channel (Physical Uplink Control Channel, PUCCH) and/or physical uplink shared channel (Physical Uplink Shared Channel, PUSCH). In this optional implementation, after transmitting the report information, the UE monitors downlink control information (Downlink Control Information, DCI) fed back by the network-side device, to determine whether the network-side device receives the report information.

Alternatively, in an optional implementation, the UE may alternatively transmit the report information to the network-side device by using a medium access control (Medium Access Control, MAC) control element (Control Element, CE). In this optional implementation, after transmitting the report information, the UE may receive feedback acknowledgement information for the MAC CE from the network-side device, or monitor DCI fed back by the network-side device, to determine whether the network-side device receives the report information. If the network-side device feeds back a response by using DCI, during uplink transmission scheduling, the DCI uses the same hybrid automatic repeat request (Hybrid Automatic Repeat Request, HARQ) process (process) as that used by a PUSCH carrying the MAC CE.

In the foregoing optional implementation, if no uplink grant (UL grant) is currently available, before the transmitting report information, the method may further include: transmitting a resource scheduling request (Scheduling Request, SR) by using a spatial object (which may be the currently used spatial object or the another spatial object) of the terminal device, to request the network-side device to perform an uplink grant. The report information is transmitted by using the MAC CE and the uplink grant of the network-side device.

In actual application, after the UE transmits the report information, the UE and the network-side device may determine a target beam for communication between the UE and the network-side device based on the report information transmitted by the UE. To ensure that beams used by control information between the UE and the network-side device are consistent with the selected target beam, and to reduce signaling interaction in beam resetting of control channels, in an optional implementation, after the transmitting the report information to the network-side device by using a MAC CE, the method further includes: determining beam information of a physical downlink control channel (Physical Downlink Control Channel, PDCCH) and a PUCCH within preset duration based on a target beam obtained by the terminal device through measurement, where the target beam is obtained by measuring a predetermined RS resource by using the at least one spatial object. In other words, the target beam may serve as a beam of the PDCCH and the PUCCH within the preset duration.

Alternatively, in another optional implementation, the UE may alternatively transmit the report information to the network-side device through a contention-free physical random access channel (Physical Random Access Channel, PRACH) in a random access procedure. In this optional implementation, after transmitting the report information to the network-side device, the UE may further receive a response message transmitted by the network-side device on a predetermined control resource set (Control Resource Set, CORESET), to determine whether the network-side device receives the report information.

Optionally, in the foregoing optional implementation, to reduce signaling interaction procedures, after the transmitting the report information to the network-side device through a contention-free PRACH, the method further includes: determining beam information of a PDCCH within preset duration and beam information of a physical downlink shared channel (Physical downlink shared channel, PDSCH) within the preset duration based on a target beam obtained by the terminal device through measurement; and determining, based on beam information corresponding to the contention-free PRACH, beam information of a PUCCH within the preset duration, where the target beam is obtained by measuring a predetermined RS resource by using the at least one spatial object. In this optional implementation, beam resetting of the PDCCH, the PDSCH, and the PUCCH can be implemented, and signaling interaction is reduced.

Alternatively, in another optional implementation, the UE may transmit the report information to the network-side device through a contention-based PRACH in a random access procedure. The report information may be directly transmitted through the contention-based PRACH. However, because information carried in the contention-based PRACH is limited, if the report information includes a large amount of content, optionally, the report information may be added to a predetermined message (for example, an Msg3) transmitted by the UE in the random access procedure. In this optional implementation, after the transmitting report information to a network-side device, the method further includes: receiving a response message fed back by the network-side device in the random access procedure, for example, an Msg2 or an Msg4, to determine whether the network-side device receives the report information.

Optionally, in the foregoing optional implementation, to reduce signaling interaction procedures, after transmitting the report information to the network-side device through a contention-based PRACH, the method further includes: determining beam information of a PDCCH within preset duration, beam information of a PDSCH within the preset duration, and beam information of a PUCCH within the preset duration based on an SSB resource corresponding to the contention-based PRACH. In actual application, a contention-based PRACH resource and an SSB resource have a correspondence. After measuring SSB resources, the UE may select an SSB resource, and then transmit, based on the correspondence, the report information to the network-side device by using a corresponding contention-based PRACH resource. The network-side device may determine, based on the contention-based PRACH resource, the SSB resource selected by the UE, and may further obtain beam information on the SSB resource, and use the beam information as the beam information of the PDCCH within the preset duration, the beam information of the PDSCH within the preset duration, and the beam information of the PUCCH within the preset duration.

Alternatively, in an optional implementation, the UE may transmit the report information by using a message A (MsgA) in a 2-step (2-step) random access channel procedure. For example, the report information may be transmitted by using a PUSCH in the MsgA. In this optional implementation, after transmitting the report information to the network-side device, the UE may monitor a message B (MsgB) fed back by the network-side device in the 2-step random access channel procedure, to determine whether the network-side device receives the report information.

Optionally, in the foregoing optional implementation, to reduce signaling interaction procedures, after the transmitting the report information by using an MsgA in a 2-step random access channel procedure, the method further includes: determining beam information of a PDCCH within preset duration and beam information of a PUCCH within the preset duration based on a target beam obtained by the terminal device through measurement; or determining beam information of a PDCCH within preset duration and beam information of a PUCCH within the preset duration based on an SSB resource corresponding to the MsgA, where the target beam is obtained by measuring a predetermined RS resource by using the at least one spatial object. In this optional implementation, beam resetting of the PDCCH and the PUCCH can be implemented, and signaling interaction is reduced.

In an optional implementation, the UE may transmit the report information based on a preset format of a beam report (beam report).

For example, a format of a beam report in the related art may be used. The beam report includes two signaling fields: a signaling field carrying identification information (for example, a CRI and/or an SSBRI) of an RS resource, and a signaling field carrying a quality parameter (for example, an L1-RSRP and/or an L1-SINR) corresponding to an RS resource. A corresponding spatial object is indicated by an uplink resource carrying the beam report; or a corresponding spatial object is indicated by identification information of an RS resource based on the spatial object configured for measuring the RS resource; or related information of RS resources in the beam report is arranged in an arrangement order, configured by the network-side device or predefined, for reporting spatial objects.

Alternatively, the beam report in the related art may be extended. For example, a signaling field for indicating the at least one spatial object is added to the beam report, and the signaling field may carry the identification information of the at least one spatial object. Alternatively, when the report information further includes other related information of the spatial object of the UE, a signaling field is extended for each piece of related information, to carry the corresponding related information.

Alternatively, a new beam report may be defined, and a format of the beam report is defined based on information included in the report information in actual application. For example, the beam report may include a signaling field that carries each piece of information included in the report information. This is not specifically limited in this embodiment of the present invention.

Alternatively, the report information may not be a beam report, but is newly defined information, and the information may implement the functions of the report information in the foregoing optional implementations, and include corresponding information.

In an optional implementation, to reduce signaling overhead procedures, after the transmitting report information to a network-side device, the method further includes: determining spatial relation information of a sounding reference signal (Sounding Reference Signal, SRS). In this optional implementation, the spatial relation information of the SRS can be reset, and the network-side device does not need to re-indicate the spatial relation information of the SRS, thereby reducing signaling overheads.

Optionally, the SRS may be a semi-persistent SRS or an aperiodic SRS.

Optionally, the SRS may be configured by the network-side device and has a correspondence with a plurality of spatial objects of the terminal device.

In an optional implementation, during determining of the spatial relation information of the SRS, in a case that the report information includes the identification information of the at least one RS resource, a reference signal corresponding to a preset RS resource of the at least one RS resource is used as a source reference signal in the spatial relation information of the SRS, where the preset RS resource is an RS resource, of the at least one RS resource, that corresponds to a spatial object on which the SRS is located. For example, the report information includes identification information CRI 1 and identification information CRI 2 that correspond to RS resources of the panel 1 and the panel 2 respectively, and the spatial object on which the SRS is located is the panel 1. In this case, a reference signal corresponding to the CRI 1 is used as the source reference signal of the SRS.

In an optional implementation, during determining of the spatial relation information of the SRS, if the network-side device has scheduled a channel on a spatial object on which the SRS is located, the spatial relation information of the SRS is determined based on beam information of the channel on the spatial object on which the SRS is located. The beam information of the channel on the spatial object on which the SRS is located includes spatial relation information of an uplink channel or transmission configuration indicator (Transmission Configuration Indicator, TCI) state information of a downlink channel. The spatial relation information of the SRS is determined based on the spatial relation information of the uplink channel or the TCI state information of the downlink channel.

FIG. 2 is a schematic flowchart of an information reporting method according to an embodiment of this application. The method may be performed by a terminal device. To be specific, the method 200 may be performed by software or hardware installed on the terminal device. As shown in FIG. 2, the method may include the following steps.

S211: Determine that a condition defined in a protocol and/or configured by a network-side device is met.

For example, if the protocol defines or the network-side device configures periodic reporting (for example, reporting of a P-MPR corresponding to each spatial object), related parameters that are defined or configured, for example, a period value and a time offset, are determined in S211. Alternatively, the protocol defines or the network-side device configures that, when a measurement request transmitted by the network-side device is received, it is determined in S211 that measurement indicated by the network-side device is completed. Alternatively, the protocol may define or the network-side device may configure periodic measurement, and it is determined in S211 that corresponding measurement is completed.

The measurement includes but is not limited to: measuring a preset reference signal (RS) resource by using different spatial objects, measuring a movement speed of a terminal device, and measuring a distance between an antenna panel currently used by the terminal device and a human body.

S212: Transmit report information to the network-side device, where the report information indicates related information of at least one spatial object of the terminal device.

Specifically, for content included in the report information and a reporting manner, refer to related descriptions in the method 100. Details are not described herein again.

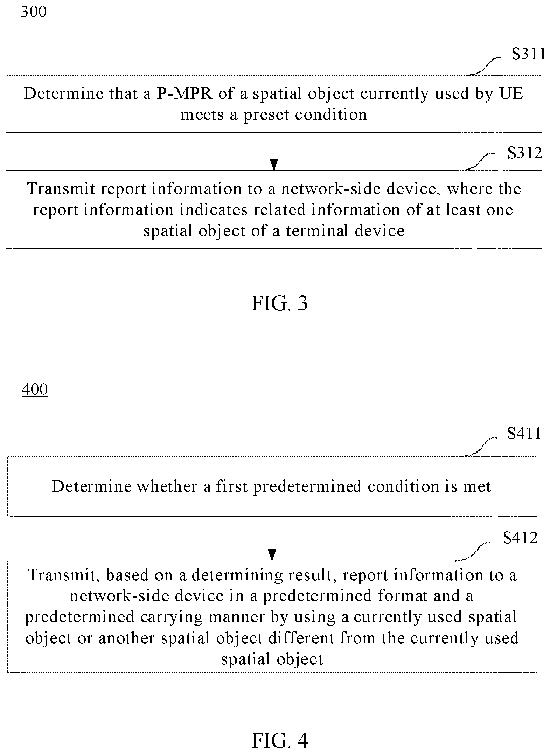

FIG. 3 is a schematic flowchart of still another information reporting method according to an embodiment of this application. The method may be performed by a terminal device. To be specific, the method 300 may be performed by software or hardware installed on the terminal device. As shown in FIG. 3, the method may include the following steps.

S311: Determine that a P-MPR of a spatial object currently used by the UE meets a preset condition.

For example, the P-MPR of the spatial object currently used by the UE is greater than or less than a predetermined value, for example, 8 db.

Before S311, the UE may perform echo measurement to determine whether power reduction is required due to proximity to the human body, and further determine the P-MPR of the currently used spatial object.

S312: Transmit report information to a network-side device, where the report information indicates related information of at least one spatial object of the terminal device.

The report information may include the P-MPR of the currently used spatial object.

In this embodiment, the report information may further include other information, and reference may be made to related descriptions in the method 100. In addition, in this embodiment, the report information may also be transmitted in the manner in the method 100. Details are not described herein again.

FIG. 4 is a schematic flowchart of still another information reporting method according to an embodiment of this application. The method may be performed by a terminal device. To be specific, the method 400 may be performed by software or hardware installed on the terminal device. As shown in FIG. 4, the method may include the following steps.

S411: Determine whether a first predetermined condition is met.

The first predetermined condition is the first predetermined condition in the method 100. For details, refer to related descriptions of the first predetermined condition in the method 100. Details are not described herein again.

S412: Transmit, based on a determining result, report information to a network-side device in a predetermined format and a predetermined carrying manner by using a currently used spatial object or another spatial object different from the currently used spatial object, where the report information indicates related information of at least one spatial object of the terminal device.

In this embodiment, the related information included in the report information and a manner of indicating the related information of the at least one spatial object are the same as those in the method 100. Details are not described herein again.

In this embodiment, similar to the method 100, whether to transmit the report information by using the currently used spatial object or the another spatial object may be determined based on whether one or any combination of the second predetermined condition, the third predetermined condition, the fourth predetermined condition, and the fifth predetermined condition is met. For details, refer to related descriptions in the method 100.

In this embodiment, the report information is in a predetermined format, which may be a format of a beam report in the related art, or may be an extended format of a beam report. For example, a signaling field for indicating the at least one spatial object is added to the beam report. Alternatively, a new beam report may be defined. Alternatively, the report information may not be a beam report, but is newly defined information. For details, refer to related descriptions in the method 100.

In this embodiment, the carrying manner of the report information includes but is not limited to at least one of the following: carried by a preset PUCCH, carried by a preset PUSCH, carried by a MAC CE, carried by a contention-free PRACH in a random access procedure, carried by a contention-based PRACH in a random access procedure, and carried by an MsgA in a 2-step random access channel procedure. For specific implementations of the foregoing carrying manners, refer to related descriptions in the method 100. Details are not described herein again.

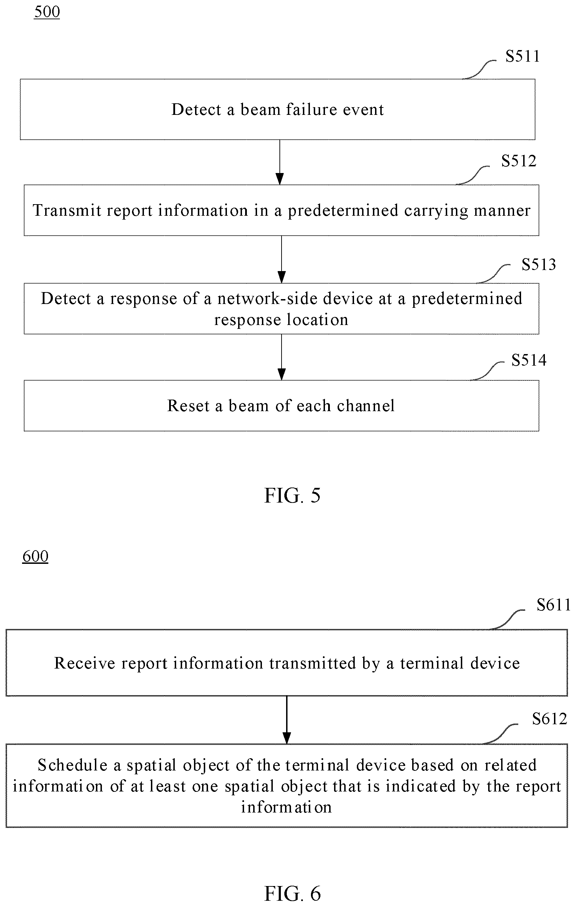

FIG. 5 is a schematic flowchart of still another information reporting method according to an embodiment of this application. The method may be performed by a terminal device. To be specific, the method 500 may be performed by software or hardware installed on the terminal device. As shown in FIG. 5, the method may include the following steps.

S511: Detect a beam failure event. To be specific, the UE detects that beam quality of all current control information is lower than a preset value. In other words, current beam quality is quite poor due to blocking or other reasons, and therefore beam transmission cannot be continued.

S512: Transmit report information in a predetermined carrying manner.

The report information is the same as that in the method 100. Details are not described herein again.

S513: Detect a response of a network-side device at a predetermined response location.

After the UE transmits the report information, the UE and the network-side device may determine a target beam for communication between the UE and the network-side device based on the report information transmitted by the UE.

S514: Reset a beam of each channel.

To ensure that beams used by channels between the UE and the network-side device are consistent with the selected target beam, and to reduce signaling interaction in beam resetting of channels, in this embodiment, the UE resets the beams of the channels.

With respect to different carrying methods, there are different response locations and different beam resetting manners. For example, this may include but is not limited to the following cases:
(1) In S512, the report information is transmitted by using a contention-free PRACH (namely, a carrying manner). In S513, the response is received from the network-side device on a specific CORESET (for example, a CORESET-BFR) (namely, a response location). The contention-free PRACH resource may correspond to a specific spatial object (to be specific, a resource location uniquely corresponds to a spatial object). The network-side device may determine a corresponding spatial object by using a PRACH resource carrying the report information, or indicate a specific spatial object by using an Msg3 after the use of the contention-free PRACH. In S514, beam information of a PDCCH and a scheduled PDSCH is determined based on a target new beam (beam resetting of the PDCCH and the PDSCH). The target new beam is determined by the UE by measuring an RS resource of a predetermined candidate beam or an RS resource of a new beam. Beam information of a PUCCH is determined based on beam information of a PRACH most recently used for transmission (beam resetting of the PUCCH).
(2) In S512, the report information is transmitted by using a contention-based PRACH. In S513, the response received from the network is an Msg2 or an Msg4, and the UE may indicate a specific spatial object by using the contention-based PRACH or an Msg3. In S514, beam information of a channel, such as a PDCCH, is determined based on an SSB corresponding to the used contention-based PRACH.
(3) In a case that there is an uplink grant, in S512, the report information is transmitted by using a MAC CE. In S513, the received response is feedback acknowledgement information for the MAC CE, or is DCI (during uplink transmission scheduling, the DCI uses the same HARQ process as that used by a PUSCH carrying the MAC CE). The MAC CE carries identification information of a specific spatial object. In S514, beam information of a PDCCH and a PUCCH is determined based on a target new beam indicated in the MAC CE, where the target new beam is determined by the UE by measuring a predetermined RS resource.
   When no UL grant (uplink grant) is available, the UE may transmit an uplink scheduling request (Scheduling Request, SR) by using a specific spatial object, to request a grant from the network, and transmit a MAC CE by using the requested uplink grant.
(4) In S512, the report information is transmitted by using an MsgA in a 2-step RACH procedure. In S513, the received response is an MsgB. The MsgA may carry identification information of a specific spatial object. In S514, beam information of a PDCCH and a PUCCH is determined based on the target new beam.

FIG. 6 is a schematic flowchart of a spatial object scheduling method according to an embodiment of this application. The method may be performed by a network-side device. To be specific, the method 600 may be performed by software or hardware installed on the network-side device. The method 600 corresponds to the methods 100 to 500, and is an implementation method after the network-side device receives report information.

As shown in FIG. 6, the method may include the following steps.

S611: Receive report information transmitted by a terminal device, where the report information indicates related information of at least one spatial object of the terminal device.

The spatial object includes but is not limited to at least one of the following: an antenna panel and a beam on the antenna panel.

The report information is the same as the report information in the method 100. Details are not described herein again.

S612: Schedule a spatial object of the terminal device based on the related information of the at least one spatial object that is indicated by the report information.

In this embodiment, corresponding to the method 100, before the scheduling a spatial object of the terminal device, the method further includes: determining the at least one spatial object in one of the following manners:
determining, based on preconfigured spatial objects for measuring predetermined RS resources, that the at least one spatial object is a spatial object corresponding to the at least one RS resource in the report information;
determining, based on a preconfigured correspondence between uplink resources and spatial objects, that the at least one spatial object is a spatial object corresponding to an uplink resource for transmitting the report information; and
determining spatial objects of the terminal device according to a preconfigured arrangement order for reporting RS resources corresponding to spatial objects of the terminal device and according to an arrangement order of identification information of the at least one RS resource in the report information.

After the report information transmitted by the UE is received, the network-side device and the UE may determine a target beam for communication between the network-side device and the UE based on the report information transmitted by the UE.

In an optional implementation, after the receiving report information transmitted by a terminal device, the method further includes: transmitting response information to the terminal device.

Corresponding to the carrying manner of the report information, for different carrying manners, the network-side device transmits the response information to the UE in different manners.

For example, in an optional implementation, the receiving report information transmitted by a terminal device may include: receiving the report information transmitted by the terminal device to the network-side device through a preset PUCCH and/or PUSCH. Correspondingly, the transmitting response information to the terminal device may include: transmitting response DCI to the terminal device.

For example, in an optional implementation, the receiving report information transmitted by a terminal device may include: receiving the report information transmitted by the terminal device to the network-side device by using a MAC CE. Correspondingly, the transmitting response information to the terminal device may include: transmitting feedback acknowledgement information for the MAC CE to the terminal device; or transmitting response DCI to the terminal device.

In the foregoing optional implementation, during uplink transmission scheduling, the DCI uses the same hybrid automatic repeat request (HARQ) process as that used by a PUSCH carrying the MAC CE.

In the foregoing optional implementation, if the UE currently does not have an available uplink grant, before the receiving report information transmitted by a terminal device, the method further includes: receiving an SR transmitted by the terminal device, where the resource SR is to request the network-side device to perform an uplink grant; and performing an uplink grant on the terminal device.

In the foregoing optional implementation, after receiving the report information transmitted by the terminal device, the network-side device selects the target beam for communicating with the UE. To ensure that beams used by channel information between the UE and the network-side device are consistent with the selected target beam, and to reduce signaling interaction in beam resetting of control channels, beam information of a control channel (for example, a PDCCH and a PUCCH) corresponding to the UE may be further reset, thereby reducing signaling overheads. Therefore, in an optional implementation, the method may further include: determining, based on a target beam obtained by the terminal device through measurement, beam information of a PDCCH corresponding to the terminal device within preset duration and beam information of a PUCCH corresponding to the terminal device within the preset duration, where the target beam is reported by the terminal device after measuring a predetermined RS resource by using the at least one spatial object.

In an optional implementation, the receiving report information transmitted by a terminal device may include: receiving the report information transmitted by the terminal device to the network-side device through a contention-free PRACH in a random access procedure. Correspondingly, the transmitting response information to the terminal device may include: transmitting the response information on a predetermined CORESET.

In the foregoing optional implementation, after the report information transmitted by the terminal device is received, beam information of a PDCCH, a PDSCH, and a PUCCH may be further reset, thereby reducing signaling. Therefore, the method may further include: determining, based on a target beam obtained by the terminal device through measurement, beam information of a PDCCH corresponding to the terminal device within preset duration and beam information of a PDSCH corresponding to the terminal device within the preset duration, and determining, based on beam information corresponding to the contention-free PRACH, beam information of a PUCCH corresponding to the terminal device within the preset duration, where the target beam is reported by the terminal device by measuring a predetermined RS resource by using the at least one spatial object.

In an optional implementation, the receiving report information transmitted by a terminal device may include: receiving the report information transmitted by the terminal device to the network-side device through a contention-based PRACH in a random access procedure. Correspondingly, the transmitting response information to the terminal device may include: feeding back the response information to the terminal device in the random access procedure.

In the foregoing optional implementation, after the report information transmitted by the terminal device is received, beam information of a PDCCH, a PDSCH, and a PUCCH may be further reset, thereby reducing signaling. Therefore, the method may further include: determining, based on a synchronization signal and PBCH block SSB resource corresponding to the contention-based PRACH, beam information of a PDCCH corresponding to the terminal device within preset duration, beam information of a PDSCH corresponding to the terminal device within the preset duration, and beam information of a PUCCH corresponding to the terminal device within the preset duration.

In the foregoing optional implementation, the receiving report information transmitted by a terminal device may include: receiving the report information transmitted by the terminal device by using an MsgA in a 2-step random access channel procedure. Correspondingly, the transmitting response information to the terminal device may include: transmitting an MsgB to the terminal device in the 2-step random access channel procedure, where the MsgB carries the response information.

In the foregoing optional implementation, after the report information transmitted by the terminal device is received, beam information of a PDCCH and a PUCCH may be further reset, thereby reducing signaling. Therefore, the method may further include: determining, based on a target beam obtained by the terminal device through measurement, beam information of a PDCCH corresponding to the terminal device within preset duration and beam information of a PUCCH corresponding to the terminal device within the preset duration; or determining, based on an SSB resource corresponding to the MsgA, beam information of a PDCCH within preset duration and beam information of a PUCCH within the preset duration, where the target beam is reported after a predetermined RS resource is measured by using the at least one spatial object.

In an optional implementation, after receiving the report information transmitted by the terminal device, the network-side device may further determine spatial relation information of an SRS of the terminal device. In this optional implementation, the network-side device does not need to re-activate beam information of the SRS by using signaling, thereby reducing signaling overheads.

In an optional implementation, in a case that the report information includes the identification information of the at least one RS resource, a reference signal corresponding to a preset RS resource of the at least one RS resource is used as a source reference signal in the spatial relation information of the SRS, where the preset RS resource is an RS resource, of the at least one RS resource, that corresponds to a spatial object on which the SRS is located.

In another optional implementation, if the network-side device has scheduled a channel on a spatial object on which the SRS is located, the spatial relation information of the SRS is determined based on beam information of the channel on the spatial object on which the SRS is located.

In an optional implementation, before the receiving report information transmitted by a terminal device, the method further includes: transmitting configuration information to the terminal device, where the configuration information includes at least one of the following: a time parameter for the terminal device to transmit the report information, the reporting event, all information included in the report information, spatial objects for measuring predetermined RS resources, spatial objects using predetermined uplink resources, RS resources corresponding to spatial objects, and an arrangement order for reporting RS resources corresponding to spatial objects. It should be noted that, in specific application, the configuration information is not limited to the foregoing information, and may further include other information that can be configured by the network-side device. This is not specifically limited in this embodiment.

With the spatial object scheduling method provided in this embodiment of this application, the network-side device may schedule a spatial object of the UE based on related information of the spatial object that is reported by the UE, so that the network-side device can schedule spatial objects of the UE based on transmission performance of the spatial objects of the UE, thereby improving transmission performance of beams.

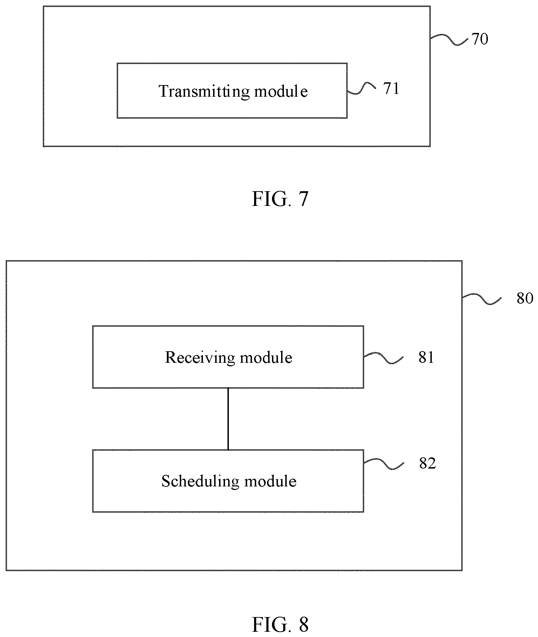

FIG. 7 is a schematic structural diagram of a terminal device according to an embodiment of this application. The terminal device 70 includes a transmitting module 71.

The transmitting module 71 is configured to transmit report information to a network-side device as defined in a protocol and/or as configured by the network-side device and/or in the case of detecting a reporting event, where the report information indicates related information of at least one spatial object of the terminal device.

In an implementation, the spatial object includes an antenna panel and/or a beam on the antenna panel.

In an implementation, that the transmitting module 71 transmits report information to a network-side device includes at least one of the following:
transmitting the report information to the network-side device as defined in a protocol;
transmitting the report information to the network-side device according to an configuration of the network-side device; and
transmitting the report information to the network-side device in the case of detecting a reporting event.

In an implementation, the reporting event includes a beam failure event.

In an implementation, that the transmitting module 71 transmits report information to a network-side device includes:
in a case that a condition defined in the protocol and/or configured by the network-side device is met, transmitting the report information to the network-side device; or in a case that a P-MPR of a currently used spatial object meets a preset condition, transmitting the report information to the network-side device.

In an implementation, the report information includes the P-MPR of the currently used spatial object.

In an implementation, the report information includes at least one of the following related information of the at least one spatial object: identification information of at least one RS resource corresponding to the at least one spatial object, P-MPR information of the at least one spatial object, a quality parameter of the at least one RS resource, a duty cycle corresponding to the at least one spatial object, and a reduction value of the quality parameter of the at least one RS resource.

In an implementation, the at least one RS resource includes a CSI-RS resource and/or a synchronization signal and PBCH block SSB resource; and/or the identification information of the RS resource includes a CSI-RS resource index CRI and/or an SSB resource index SSBRI; and/or the quality parameter of the RS resource includes a layer 1-reference signal received power L1-RSRP and/or a layer 1-signal to interference plus noise ratio L1-SINR.

In an implementation, that the report information indicates the related information of the at least one spatial object includes:
the report information includes the identification information of the at least one RS resource, and the at least one spatial object is indicated by the identification information of the at least one RS resource, where the at least one spatial object is used for measuring the at least one RS resource, as configured by the network-side device; or
the related information that corresponds to the at least one spatial object and that is included in the report information is arranged in an arrangement order configured by the network-side device or predefined, to indicate the corresponding related information of the at least one spatial object, where the arrangement order is used for indicating an arrangement order for reporting the related information of at least one spatial object of the terminal device.

In an implementation, that the report information indicates the related information of the at least one spatial object includes:
the report information includes identification information of the at least one spatial object; or
based on a correspondence between uplink resources and identification information of spatial objects, the report information is transmitted by using an uplink resource corresponding to the at least one spatial object, to indicate identification information of the at least one spatial object.

In an implementation, the configuration by the network-side device includes: forcing the terminal device to indicate the related information of the at least one spatial object when the terminal device reports the report information; or allowing the terminal device to indicate the related information of the at least one spatial object when the terminal device reports the report information.

In an implementation, that the transmitting module 71 transmits report information to a network-side device includes:
transmitting, depending on whether a first predetermined condition is met, the report information to the network-side device by using the currently used spatial object or another spatial object of the terminal device different from the spatial obj ect.

In an implementation, that whether a first predetermined condition is met includes at least one of the following:
whether a quality parameter obtained by measuring a reference signal by using different spatial objects of the terminal device meets a second predetermined condition;
whether a link quality degradation value on the currently used spatial object meets a third predetermined condition within a predetermined time period;
whether a P-MPR of a spatial object of the terminal device meets a fourth predetermined condition;
whether uplink quality and downlink quality on the currently used spatial object meet a fifth predetermined condition; and
whether a movement speed of the terminal device meets a sixth predetermined condition.

In an implementation, that whether a P-MPR of a spatial object of the terminal device meets a fourth predetermined condition includes one of the following:
whether the P-MPR of the spatial object currently used by the terminal device exceeds a first quality difference, where the first quality difference includes a difference between beam link quality on the currently used spatial object and beam link quality on the another spatial object;
whether the P-MPR of the currently used spatial object exceeds a predetermined threshold within a predetermined time range; and
whether a P-MPR difference exceeds a second quality difference, where the P-MPR difference is a difference between the P-MPR of the currently used spatial object and a P-MPR of the another spatial object, and the second quality difference is a difference between beam link quality on the currently used spatial object and beam link quality on the another spatial object.

In an implementation, that the transmitting module 71 transmits report information to a network-side device includes: transmitting the report information to the network-side device through a preset PUCCH and/or PUSCH; and the terminal device 70 further includes a first monitoring module, configured to: after the report information is transmitted to the network-side device, monitor downlink control information DCI fed back by the network-side device.

In an implementation, that the transmitting module 71 transmits report information to a network-side device includes: transmitting the report information to the network-side device by using a MAC CE; and the terminal device 70 further includes a first receiving module, configured to: after the report information is transmitted to the network-side device, receive feedback acknowledgement information for the MAC CE from the network-side device, or monitor DCI fed back by the network-side device.

In an implementation, during uplink transmission scheduling, the DCI uses the same HARQ process as that used by a PUSCH carrying the MAC CE.

In an implementation, the terminal device further includes a request module, configured to: before the report information is transmitted to the network-side device by using the MAC CE, if no uplink grant is currently available, transmit an SR by using a spatial object of the terminal device, to request the network-side device to perform an uplink grant.

In an implementation, the first determining module is configured to: after the report information is transmitted to the network-side device by using the MAC CE, determine beam information of a PDCCH within preset duration and beam information of a PUCCH within the preset duration based on a target beam obtained by the terminal device through measurement, where the target beam is obtained by measuring a predetermined RS resource by using the at least one spatial object.

In an implementation, that the transmitting module 71 transmits report information to a network-side device includes: transmitting the report information to the network-side device through a contention-free PRACH in a random access procedure; and the terminal device further includes a second receiving module, configured to: after the report information is transmitted to the network-side device, receive a response message transmitted by the network-side device on a predetermined control resource set (CORESET).

In an implementation, the terminal device further includes a second determining module, configured to: after the report information is transmitted to the network-side device through the contention-free PRACH, determine beam information of a PDCCH within preset duration and beam information of a PDSCH within the preset duration based on a target beam obtained by the terminal device through measurement, and determine, based on beam information corresponding to the contention-free PRACH, beam information of a PUCCH within the preset duration, where the target beam is obtained by measuring a predetermined RS resource by using the at least one spatial object.

In an implementation, that the transmitting module 71 transmits report information to a network-side device includes: transmitting the report information to the network-side device through a contention-based PRACH in a random access procedure; and the terminal device further includes a third receiving module, configured to: after the report information is transmitted to the network-side device, receive a response message fed back by the network-side device in the random access procedure.

In an implementation, that the transmitting module 71 transmits the report information to the network-side device through a contention-based PRACH in a random access procedure includes: adding the report information to a predetermined message to be transmitted in the random access procedure.

In an implementation, the terminal device further includes a third determining module, configured to: after the report information is transmitted to the network-side device through the contention-based PRACH, determine beam information of a PDCCH within preset duration, beam information of a PDSCH within the preset duration, and beam information of a PUCCH within the preset duration based on an SSB resource corresponding to the contention-based PRACH.

In an implementation, that the transmitting module 71 transmits report information to a network-side device includes: transmitting the report information by using an MsgA in a 2-step random access channel procedure; and the terminal device further includes a second monitoring module, configured to: after the report information is transmitted to the network-side device, monitor an MsgB fed back by the network-side device in the 2-step random access channel procedure.

In an implementation, that the transmitting module transmits the report information by using an MsgA in a 2-step random access channel procedure includes: transmitting the report information by using a PUSCH in the MsgA.

In an implementation, the terminal device further includes a fourth determining module, configured to: after the report information is transmitted by using the MsgA in the 2-step random access channel procedure, determine beam information of a PDCCH within preset duration and beam information of a PUCCH within the preset duration based on a target beam obtained by the terminal device through measurement or based on an SSB resource corresponding to the MsgA, where the target beam is obtained by measuring a predetermined RS resource by using the at least one spatial object.

In an implementation, the at least one spatial object includes a target spatial object to be switched to.

In an implementation, that the transmitting module 71 transmits report information to a network-side device includes: transmitting the report information based on a preset format of a beam report.

In an implementation, the beam report includes a signaling field that carries each piece of information included in the report information.

In an implementation, the terminal device further includes a fifth determining module, configured to: after the report information is transmitted to the network-side device, determine spatial relation information of an SRS.

In an implementation, the SRS is a semi-persistent SRS or an aperiodic SRS; and/or the SRS is configured by the network-side device and has a correspondence with a plurality of spatial objects of the terminal device.

In an implementation, that the fifth determining module is configured to determine spatial relation information of an SRS includes:
in a case that the report information includes the identification information of the at least one RS resource, using a reference signal corresponding to a preset RS resource of the at least one RS resource as a source reference signal in the spatial relation information of the SRS, where the preset RS resource is an RS resource, of the at least one RS resource, that corresponds to a spatial object on which the SRS is located; or
if the network-side device has scheduled a channel on a spatial object on which the SRS is located, determining the spatial relation information of the SRS based on beam information of the channel on the spatial object on which the SRS is located.

The terminal device 70 provided in this embodiment of this application is capable of performing the method steps corresponding to the method embodiments of FIG. 1 to FIG. 5, and implementing the functions and the beneficial effects of the methods described in the method embodiments. Details are not described herein again.

FIG. 8 is a schematic structural diagram of a network-side device according to an embodiment of this application. The network-side device 80 includes a receiving module 81 and a scheduling module 82.

The receiving module 81 is configured to receive report information transmitted by a terminal device, where the report information indicates related information of at least one spatial object of the terminal device.

The scheduling module 82 is configured to schedule a spatial object of the terminal device based on the related information of the at least one spatial object that is indicated by the report information.

In an implementation, the spatial object includes at least one of the following: an antenna panel and a beam on the antenna panel.

In an implementation, the report information includes at least one of the following related information of the at least one spatial object: identification information of at least one RS resource corresponding to the at least one spatial object, P-MPR information of the at least one spatial object, a quality parameter of the at least one RS resource, a duty cycle corresponding to the at least one spatial object, and a reduction value of the quality parameter of the at least one RS resource.

In an implementation, the at least one RS resource includes a CSI-RS resource and/or an SSB resource; and/or the identification information of the RS resource includes a CRI and/or an SSBRI; and/or the quality parameter of the RS resource includes an L1-RSRP and/or an L1-SINR.

In an implementation, the network-side device further includes a first determining module, configured to: before the spatial object of the terminal device is scheduled, determine the at least one spatial object in one of the following manners: determining, based on preconfigured spatial objects for measuring predetermined RS resources, that the at least one spatial object is a spatial object corresponding to the at least one RS resource in the report information; determining, based on a preconfigured correspondence between uplink resources and spatial objects, that the at least one spatial object is a spatial object corresponding to an uplink resource for transmitting the report information; and determining spatial objects of the terminal device according to a preconfigured arrangement order for reporting RS resources corresponding to spatial objects of the terminal device and according to an arrangement order of the identification information of the at least one RS resource in the report information.

In an implementation, the report information includes identification information of the at least one spatial object.

In an implementation, the network-side device further includes a response module, configured to: after the report information transmitted by the terminal device is received, transmit response information to the terminal device.

In an implementation, the receiving module 81 is configured to receive the report information transmitted by the terminal device to the network-side device through a preset PUCCH and/or PUSCH, and the response module is configured to transmit response DCI to the terminal device.

In an implementation, the receiving module 81 is configured to receive the report information transmitted by the terminal device to the network-side device by using a MAC CE, and the response module is configured to transmit feedback acknowledgement information for the MAC CE to the terminal device, or transmit response DCI to the terminal device.

In an implementation, during uplink transmission scheduling, the DCI uses the same HARQ process as that used by a PUSCH carrying the MAC CE.

In an implementation, the receiving module 81 is further configured to: before receiving the report information transmitted by the terminal device, receive an SR transmitted by the terminal device, where the resource SR is to request the network-side device to perform an uplink grant; and the network-side device further includes a grant module, configured to perform an uplink grant on the terminal device.

In an implementation, the network-side device further includes a second determining module, configured to: after the report information transmitted by the terminal device is received, determine, based on a target beam obtained by the terminal device through measurement, beam information of a PDCCH corresponding to the terminal device within preset duration and beam information of a PUCCH corresponding to the terminal device within the preset duration, where the target beam is reported by the terminal device after measuring a predetermined RS resource by using the at least one spatial object.

In an implementation, the receiving module 81 is configured to receive the report information transmitted by the terminal device to the network-side device through a contention-free physical random access channel PRACH in a random access procedure, and the response module is configured to transmit the response information on a predetermined CORESET.

In an implementation, the network-side device further includes a third determining module, configured to: after the report information transmitted by the terminal device is received, determine, based on a target beam obtained by the terminal device through measurement, beam information of a PDCCH corresponding to the terminal device within preset duration and beam information of a PDSCH corresponding to the terminal device within the preset duration, and determine, based on beam information corresponding to the contention-free PRACH, beam information of a PUCCH corresponding to the terminal device within the preset duration, where the target beam is reported by the terminal device by measuring a predetermined RS resource by using the at least one spatial object.

In an implementation, the receiving module 81 is configured to receive the report information transmitted by the terminal device to the network-side device through a contention-based PRACH in a random access procedure, and the response module is configured to feed back the response information to the terminal device in the random access procedure.

In an implementation, the network-side device further includes a fourth determining module, configured to: after the report information transmitted by the terminal device is received, determine, based on an SSB resource corresponding to the contention-based PRACH, beam information of a PDCCH corresponding to the terminal device within preset duration, beam information of a PDSCH corresponding to the terminal device within the preset duration, and beam information of a PUCCH corresponding to the terminal device within the preset duration.

In an implementation, the receiving module 81 is configured to receive the report information transmitted by the terminal device by using a message A MsgA in a 2-step random access channel procedure, and the response module is configured to transmit an MsgB to the terminal device in the 2-step random access channel procedure, where the MsgB carries the response information.

In an implementation, the network-side device further includes a fifth determining module, configured to: after the report information transmitted by the terminal device is received, determine, based on a target beam obtained by the terminal device through measurement or based on an SSB resource corresponding to the MsgA, beam information of a PDCCH corresponding to the terminal device within preset duration and beam information of a PUCCH corresponding to the terminal device within the preset duration, where the target beam is reported after a predetermined RS resource is measured by using the at least one spatial object.

In an implementation, the network-side device further includes a sixth determining module, configured to: after the report information transmitted by the terminal device is received, determine spatial relation information of an SRS of the terminal device.

In an implementation, that the sixth determining module determines spatial relation information of an SRS of the terminal device includes:
in a case that the report information includes the identification information of the at least one RS resource, using a reference signal corresponding to a preset RS resource of the at least one RS resource as a source reference signal in the spatial relation information of the SRS, where the preset RS resource is an RS resource, of the at least one RS resource, that corresponds to a spatial object on which the SRS is located; or
if the network-side device has scheduled a channel on a spatial object on which the SRS is located, determining the spatial relation information of the SRS based on beam information of the channel on the spatial object on which the SRS is located.

In an implementation, the network-side device further includes a transmitting module, configured to: before the report information transmitted by the terminal device is received, transmit configuration information to the terminal device, where the configuration information includes at least one of the following: a time parameter for the terminal device to transmit the report information, the reporting event, all information included in the report information, spatial objects for measuring predetermined RS resources, spatial objects using predetermined uplink resources, RS resources corresponding to spatial objects, and an arrangement order for reporting RS resources corresponding to all spatial objects.

In an implementation, the network-side device further includes a seventh determining module, configured to: before the spatial object of the terminal device is scheduled, determine the at least one spatial object in one of the following manners: determining the at least one spatial object based on identification information of the at least one spatial object that is included in the report information; and determining, based on a preconfigured correspondence between uplink resources and spatial objects, that the at least one spatial object is a spatial object corresponding to an uplink resource for transmitting the report information.

The network-side device 80 provided in this embodiment of this application is capable of performing the method steps corresponding to the method embodiments of FIG. 6, and implementing the functions and the beneficial effects of the methods described in the method embodiments. Details are not described herein again.

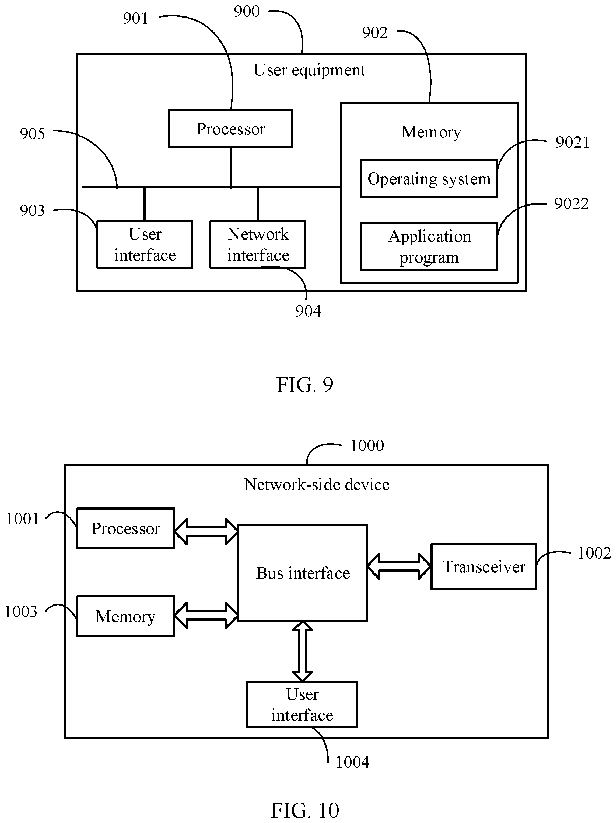

FIG. 9 is a block diagram of user equipment according to another embodiment of the present invention. The user equipment 900 includes at least one processor 901, a memory 902, at least one network interface 904, and a user interface 903. The components of the user equipment 900 are coupled together through a bus system 905. It can be understood that the bus system 905 is configured to implement connection and communication between these components. In addition to a data bus, the bus system 905 further includes a power bus, a control bus, and a status signal bus. However, for clarity of description, various buses are marked as the bus system 905 in FIG. 9.

The user interface 903 may include a display, a keyboard, or a pointing device (for example, a mouse, a trackball (trackball), a touch panel, or a touchscreen).

It can be understood that the memory 902 in this embodiment of the present invention may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. By way of example but not restrictive description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch Link DRAM, SLDRAM), and a direct rambus random access memory (Direct Rambus RAM, DRRAM). The memory 902 in the system and method described in the embodiments of the present invention is intended to include but is not limited to these and any other suitable types of memories.

In some embodiments, the memory 902 stores the following elements: executable modules or data structures, or a subset thereof, or an extended set thereof: an operating system 9021 and an application program 9022.

The operating system 9021 includes various system programs, such as a framework layer, a core library layer, and a driver layer, for implementing various basic services and processing hardware-based tasks. The application program 9022 includes various application programs, such as a media player (Media Player) and a browser (Browser), which are used to implement various application services. A program for implementing the method in this embodiment of the present invention may be included in the application program 9022.

In this embodiment of the present invention, the user equipment 900 further includes a computer program stored in the memory and capable of running on the processor. When the computer program is executed by the processor, the following step is implemented: transmitting report information to a network-side device, where the report information indicates related information of at least one spatial object of the terminal device.

The method disclosed in the foregoing embodiments of the present invention may be applied to the processor 901 or implemented by the processor 901. The processor 901 may be an integrated circuit chip, having a signal processing capability. During implementation, the steps of the foregoing method may be completed by hardware integrated logic circuits in the processor 901 or instructions in the form of software. The foregoing processor 901 may be a general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor may implement or perform the methods, steps, and logical block diagrams that are disclosed in the embodiments of the present invention. The general-purpose processor may be a microprocessor, or the processor may also be any conventional processor or the like. Steps of the methods disclosed with reference to the embodiments of the present invention may be directly performed and completed by using a hardware decoding processor, or may be performed and completed by using a combination of hardware and a software module in a decoding processor. The software module may be located in a computer-readable storage medium that is mature in the art, such as a random access memory, a flash memory, a read-only memory, a programmable read-only memory, or an electrically erasable programmable memory, or a register. The computer-readable storage medium is located in the memory 902, and the processor 901 fetches information in the memory 902, and completes the steps of the foregoing method in combination with its hardware. Specifically, the computer-readable storage medium stores a computer program, where when the computer program is executed by the processor 901, the steps of the method embodiments of FIG. 1 to FIG. 5 are implemented.

It can be understood that the embodiments described in the embodiments of the present invention may be implemented by hardware, software, firmware, middleware, microcode, or a combination thereof. For hardware implementation, the processing unit may be implemented in one or more application-specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit for executing the functions described in the present invention, or a combination thereof.

For software implementation, the technologies described in the embodiments of the present invention may be implemented by modules (for example, processes or functions) that perform the functions described in the embodiments of the present invention. Software code may be stored in the memory and executed by the processor. The memory may be implemented in or outside the processor.

Optionally, when the computer program is executed by the processor 901, the following steps may be further implemented:

In an implementation, the spatial object includes an antenna panel and/or a beam on the antenna panel.

In an implementation, the transmitting report information to a network-side device includes at least one of the following:
transmitting the report information to the network-side device as defined in a protocol;
transmitting the report information to the network-side device according to an configuration of the network-side device; and
transmitting the report information to the network-side device in the case of detecting a reporting event.

In an implementation, the reporting event includes a beam failure event.

In an implementation, the transmitting report information to a network-side device includes:
in a case that a condition defined in the protocol and/or configured by the network-side device is met, transmitting the report information to the network-side device; or in a case that a P-MPR of a currently used spatial object meets a preset condition, transmitting the report information to the network-side device.

In an implementation, the report information includes the P-MPR of the currently used spatial object.

In an implementation, the report information includes at least one of the following related information of the at least one spatial object: identification information of at least one RS resource corresponding to the at least one spatial object, P-MPR information of the at least one spatial object, a quality parameter of the at least one RS resource, a duty cycle corresponding to the at least one spatial object, and a reduction value of the quality parameter of the at least one RS resource.

In an implementation, the at least one RS resource includes a CSI-RS resource and/or a synchronization signal and PBCH block SSB resource; and/or the identification information of the RS resource includes a CSI-RS resource index CRI and/or an SSB resource index SSBRI; and/or the quality parameter of the RS resource includes a layer 1-reference signal received power L1-RSRP and/or a layer 1-signal to interference plus noise ratio L1-SINR.

In an implementation, that the report information indicates the related information of the at least one spatial object includes:
the report information includes the identification information of the at least one RS resource, and the at least one spatial object is indicated by the identification information of the at least one RS resource, where the at least one spatial object is used for measuring the at least one RS resource, as configured by the network-side device; or
the related information that corresponds to the at least one spatial object and that is included in the report information is arranged in an arrangement order configured by the network-side device or predefined, to indicate the corresponding related information of the at least one spatial object, where the arrangement order is used for indicating an arrangement order for reporting the related information of at least one spatial object of the terminal device.

In an implementation, that the report information indicates the related information of the at least one spatial object includes:
the report information includes identification information of the at least one spatial object; or
based on a correspondence between uplink resources and identification information of spatial objects, the report information is transmitted by using an uplink resource corresponding to the at least one spatial object, to indicate identification information of the at least one spatial object.

In an implementation, the configuration by the network-side device includes: forcing the terminal device to indicate the related information of the at least one spatial object when the terminal device reports the report information; or allowing the terminal device to indicate the related information of the at least one spatial object when the terminal device reports the report information.

In an implementation, the transmitting report information to a network-side device includes:
transmitting, depending on whether a first predetermined condition is met, the report information to the network-side device by using the currently used spatial object or another spatial object of the terminal device different from the spatial obj ect.

In an implementation, that whether a first predetermined condition is met includes at least one of the following:
whether a quality parameter obtained by measuring a reference signal by using different spatial objects of the terminal device meets a second predetermined condition;
whether a link quality degradation value on the currently used spatial object meets a third predetermined condition within a predetermined time period;
whether a P-MPR of a spatial object of the terminal device meets a fourth predetermined condition;
whether uplink quality and downlink quality on the currently used spatial object meet a fifth predetermined condition; and
whether a movement speed of the terminal device meets a sixth predetermined condition.

In an implementation, that whether a P-MPR of a spatial object of the terminal device meets a fourth predetermined condition includes one of the following:
whether the P-MPR of the spatial object currently used by the terminal device exceeds a first quality difference, where the first quality difference includes a difference between beam link quality on the currently used spatial object and beam link quality on the another spatial object;
whether the P-MPR of the currently used spatial object exceeds a predetermined threshold within a predetermined time range; and
whether a P-MPR difference exceeds a second quality difference, where the P-MPR difference is a difference between the P-MPR of the currently used spatial object and a P-MPR of the another spatial object, and the second quality difference is a difference between beam link quality on the currently used spatial object and beam link quality on the another spatial object.

In an implementation, the transmitting report information to a network-side device includes: transmitting the report information to the network-side device through a preset PUCCH and/or PUSCH; and
after the transmitting report information to a network-side device, the method further includes: monitoring downlink control information DCI fed back by the network-side device.

In an implementation, the transmitting report information to a network-side device includes: transmitting the report information to the network-side device by using a MAC CE; and
after the transmitting report information to a network-side device, the method further includes: receiving feedback acknowledgement information for the MAC CE from the network-side device, or monitoring DCI fed back by the network-side device.

In an implementation, during uplink transmission scheduling, the DCI uses the same HARQ process as that used by a PUSCH carrying the MAC CE.

In an implementation, before the transmitting the report information to the network-side device by using a MAC CE, the method further includes:
if no uplink grant is currently available, transmitting an SR by using a spatial object of the terminal device, to request the network-side device to perform an uplink grant.

In an implementation, after the transmitting the report information to the network-side device by using a MAC CE, the method further includes: determining beam information of a PDCCH within preset duration and beam information of a PUCCH within the preset duration based on a target beam obtained by the terminal device through measurement, where the target beam is obtained by measuring a predetermined RS resource by using the at least one spatial object.

In an implementation, the transmitting report information to a network-side device includes: transmitting the report information to the network-side device through a contention-free physical random access channel PRACH in a random access procedure; and
after the transmitting report information to a network-side device, the method further includes: receiving a response message transmitted by the network-side device on a predetermined control resource set CORESET.

In an implementation, after the transmitting the report information to the network-side device through a contention-free PRACH, the method further includes:
determining beam information of a PDCCH within preset duration and beam information of a PDSCH within the preset duration based on a target beam obtained by the terminal device through measurement, and determining, based on beam information corresponding to the contention-free PRACH, beam information of a PUCCH within the preset duration, where the target beam is obtained by measuring a predetermined RS resource by using the at least one spatial object.

In an implementation, the transmitting report information to a network-side device includes: transmitting the report information to the network-side device through a contention-based PRACH in a random access procedure; and
after the transmitting report information to a network-side device, the method further includes: receiving a response message fed back by the network-side device in the random access procedure.

In an implementation, the transmitting the report information to the network-side device through a contention-based PRACH in a random access procedure includes: adding the report information to a predetermined message to be transmitted in the random access procedure.

In an implementation, after the transmitting the report information to the network-side device through a contention-based PRACH, the method further includes: determining beam information of a PDCCH within preset duration, beam information of a PDSCH within the preset duration, and beam information of a PUCCH within the preset duration based on a synchronization signal and PBCH block SSB resource corresponding to the contention-based PRACH.

In an implementation, the transmitting report information to a network-side device includes: transmitting the report information by using a message A MsgA in a 2-step random access channel procedure; and
after the transmitting report information to a network-side device, the method further includes: monitoring a message B MsgB fed back by the network-side device in the 2-step random access channel procedure.

In an implementation, the transmitting the report information by using an MsgA in a 2-step random access channel procedure includes: transmitting the report information by using a PUSCH in the MsgA.

In an implementation, after the transmitting the report information by using an MsgA in a 2-step random access channel procedure, the method further includes: determining beam information of a PDCCH within preset duration and beam information of a PUCCH within the preset duration based on a target beam obtained by the terminal device through measurement or based on an SSB resource corresponding to the MsgA, where the target beam is obtained by measuring a predetermined RS resource by using the at least one spatial object.

In an implementation, the at least one spatial object includes a target spatial object to be switched to.

In an implementation, the transmitting report information to a network-side device includes:
transmitting the report information based on a preset format of a beam report.

In an implementation, the beam report includes a signaling field that carries each piece of information included in the report information.

In an implementation, after the transmitting report information to a network-side device, the method further includes:
determining spatial relation information of an SRS.

In an implementation, the SRS is a semi-persistent SRS or an aperiodic SRS; and/or
the SRS is configured by the network-side device and has a correspondence with a plurality of spatial objects of the terminal device.

In an implementation, the determining spatial relation information of an SRS includes:
in a case that the report information includes the identification information of the at least one RS resource, using a reference signal corresponding to a preset RS resource of the at least one RS resource as a source reference signal in the spatial relation information of the SRS, where the preset RS resource is an RS resource, of the at least one RS resource, that corresponds to a spatial object on which the SRS is located; or
if the network-side device has scheduled a channel on a spatial object on which the SRS is located, determining the spatial relation information of the SRS based on beam information of the channel on the spatial object on which the SRS is located.

FIG. 10 is a structural diagram of a network-side device according to an embodiment of the present invention. The network-side device 1000 includes a processor 1001, a transceiver 1002, a memory 1003, a user interface 1004, and a bus interface.

In this embodiment of the present invention, the network-side device 1000 further includes a computer program stored in the memory 1003 and capable of running on the processor 1001. When the computer program is executed by the processor 1001, the following steps are implemented: receiving report information transmitted by a terminal device, where the report information indicates related information of at least one spatial object of the terminal device; and scheduling a spatial object of the terminal device based on the related information of the at least one spatial object that is indicated by the report information.

In FIG. 10, a bus architecture may include any quantity of interconnected buses and bridges, and specifically connect together various circuits of one or more processors represented by the processor 1001 and a memory represented by the memory 1003. The bus architecture may further interconnect various other circuits such as a peripheral device, a voltage regulator, and a power management circuit. These are all well known in the art, and therefore are not further described in this specification. The bus interface provides an interface. The transceiver 1002 may be a plurality of components, including a transmitter and a receiver, and provides units for communicating with a variety of other apparatuses on a transmission medium. For different user equipments, the user interface 1004 may alternatively be an interface that can be externally or internally connected to a required device. The connected device includes but is not limited to a keypad, a display, a speaker, a microphone, a joystick, and the like.

The processor 1001 is responsible for management of the bus architecture and general processing, and the memory 1003 may store data for use by the processor 1001 when the processor 1001 performs an operation.

Optionally, when the computer program is executed by the processor 1003, the following steps may be further implemented:

In an implementation, the spatial object includes at least one of the following: an antenna panel and a beam on the antenna panel.

In an implementation, the report information includes at least one of the following related information of the at least one spatial object: identification information of at least one RS resource corresponding to the at least one spatial object, a quality parameter of the at least one RS resource, a duty cycle corresponding to the at least one spatial object, P-MPR information of the at least one spatial object, and a reduction value of the quality parameter of the at least one RS resource.

In an implementation, the at least one RS resource includes a CSI-RS resource and/or a synchronization signal and PBCH block SSB resource; and/or
the identification information of the RS resource includes a CSI-RS resource index CRI and/or an SSB resource index SSBRI; and/or
the quality parameter of the RS resource includes a layer 1-reference signal received power L1-RSRP and/or a layer 1-signal to interference plus noise ratio L1-SINR.

In an implementation, before the scheduling a spatial object of the terminal device, the method further includes: determining the at least one spatial object in one of the following manners:
determining, based on preconfigured spatial objects for measuring predetermined RS resources, that the at least one spatial object is a spatial object corresponding to the at least one RS resource in the report information;
determining, based on a preconfigured correspondence between uplink resources and spatial objects, that the at least one spatial object is a spatial object corresponding to an uplink resource for transmitting the report information; and
determining spatial objects of the terminal device according to a preconfigured arrangement order for reporting RS resources corresponding to spatial objects of the terminal device and according to an arrangement order of identification information of the at least one RS resource in the report information.

In an implementation, the report information includes identification information of the at least one spatial object.

In an implementation, after the receiving report information transmitted by a terminal device, the method further includes: transmitting response information to the terminal device.

In an implementation, the receiving report information transmitted by a terminal device includes: receiving the report information transmitted by the terminal device to the network-side device through a preset PUCCH and/or PUSCH; and
the transmitting response information to the terminal device includes: transmitting response DCI to the terminal device.

In an implementation, the receiving report information transmitted by a terminal device includes: receiving the report information transmitted by the terminal device to the network-side device by using a MAC CE; and
the transmitting response information to the terminal device includes: transmitting feedback acknowledgement information for the MAC CE to the terminal device; or transmitting response DCI to the terminal device.

In an implementation, during uplink transmission scheduling, the DCI uses the same HARQ process as that used by a PUSCH carrying the MAC CE.

In an implementation, before the receiving report information transmitted by a terminal device, the method further includes:
receiving an SR transmitted by the terminal device, where the resource SR is to request the network-side device to perform an uplink grant; and
performing an uplink grant on the terminal device.

In an implementation, after the receiving report information transmitted by a terminal device, the method further includes:
determining, based on a target beam obtained by the terminal device through measurement, beam information of a PDCCH corresponding to the terminal device within preset duration and beam information of a PUCCH corresponding to the terminal device within the preset duration, where the target beam is reported by the terminal device after measuring a predetermined RS resource by using the at least one spatial object.

In an implementation, the receiving report information transmitted by a terminal device includes: receiving the report information transmitted by the terminal device to the network-side device through a contention-free physical random access channel PRACH in a random access procedure; and
the transmitting response information to the terminal device includes: transmitting the response information on a predetermined CORESET.

In an implementation, after the receiving report information transmitted by a terminal device, the method further includes:
determining, based on a target beam obtained by the terminal device through measurement, beam information of a PDCCH corresponding to the terminal device within preset duration and beam information of a PDSCH corresponding to the terminal device within the preset duration, and determining, based on beam information corresponding to the contention-free PRACH, beam information of a PUCCH corresponding to the terminal device within the preset duration, where the target beam is reported by the terminal device by measuring a predetermined RS resource by using the at least one spatial object.

In an implementation, the receiving report information transmitted by a terminal device includes: receiving the report information transmitted by the terminal device to the network-side device through a contention-based PRACH in a random access procedure; and
the transmitting response information to the terminal device includes: feeding back the response information to the terminal device in the random access procedure.

In an implementation, after the receiving report information transmitted by a terminal device, the method further includes:
determining, based on a synchronization signal and PBCH block SSB resource corresponding to the contention-based PRACH, beam information of a PDCCH corresponding to the terminal device within preset duration, beam information of a PDSCH corresponding to the terminal device within the preset duration, and beam information of a PUCCH corresponding to the terminal device within the preset duration.

In an implementation, the receiving report information transmitted by a terminal device includes: receiving the report information transmitted by the terminal device by using a message A MsgA in a 2-step random access channel procedure; and
the transmitting response information to the terminal device includes: transmitting an MsgB to the terminal device in the 2-step random access channel procedure, where the MsgB carries the response information.

In an implementation, after the receiving report information transmitted by a terminal device, the method further includes:
determining, based on a target beam obtained by the terminal device through measurement or based on an SSB resource corresponding to the MsgA, beam information of a PDCCH corresponding to the terminal device within preset duration and beam information of a PUCCH corresponding to the terminal device within the preset duration, where the target beam is reported after a predetermined RS resource is measured by using the at least one spatial object.

In an implementation, after the receiving report information transmitted by a terminal device, the method further includes:
determining spatial relation information of an SRS of the terminal device.

In an implementation, the determining spatial relation information of an SRS of the terminal device includes:
in a case that the report information includes the identification information of the at least one RS resource, using a reference signal corresponding to a preset RS resource of the at least one RS resource as a source reference signal in the spatial relation information of the SRS, where the preset RS resource is an RS resource, of the at least one RS resource, that corresponds to a spatial object on which the SRS is located; or
if the network-side device has scheduled a channel on a spatial object on which the SRS is located, determining the spatial relation information of the SRS based on beam information of the channel on the spatial object on which the SRS is located.

In an implementation, before the receiving report information transmitted by a terminal device, the method further includes:
transmitting configuration information to the terminal device, where the configuration information includes at least one of the following: a time parameter for the terminal device to transmit the report information, the reporting event, all information included in the report information, spatial objects for measuring predetermined RS resources, spatial objects using predetermined uplink resources, RS resources corresponding to spatial objects, and an arrangement order for reporting RS resources corresponding to spatial objects.

An embodiment of the present invention further provides a computer-readable storage medium, where the computer-readable storage medium stores a computer program. When the computer program is executed by a processor, the processes of the method embodiments of FIG. 1 to FIG. 6 are implemented, with the same technical effects achieved. To avoid repetition, details are not described herein again. For example, the computer-readable storage medium is a read-only memory (Read-Only Memory, ROM), a random access memory (Random Access Memory, RAM), a magnetic disk, an optical disk, or the like.

It should be noted that, in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network-side device, or the like) to perform the method described in the embodiments of the present invention.

The embodiments of the present invention are described above with reference to the accompanying drawings, but the present invention is not limited to the foregoing implementations. The foregoing embodiments are only illustrative rather than restrictive. Inspired by the present invention, a person of ordinary skill in the art can still derive many variations without departing from the essence of the present invention and the protection scope of the claims. All these variations shall fall within the protection of the present invention.

## Claims

1. An information reporting method, wherein the method comprises:
transmitting, by a terminal device, report information to a network-side device, wherein the report information indicates related information of at least one spatial object of the terminal device.

2. The method according to claim 1, wherein the spatial object comprises an antenna panel and/or a beam on the antenna panel.

3. The method according to claim 1, wherein the transmitting, by a terminal device, report information to a network-side device comprises at least one of the following:
transmitting, by the terminal device, the report information to the network-side device as defined in a protocol;
transmitting, by the terminal device, the report information to the network-side device according to an configuration of the network-side device; and
transmitting, by the terminal device, the report information to the network-side device in the case of detecting a reporting event.

4. The method according to claim 3, wherein the reporting event comprises a beam failure event.

5. The method according to claim 3, wherein the transmitting, by a terminal device, report information to a network-side device comprises:
in a case that a condition defined in the protocol and/or configured by the network-side device is met, transmitting, by the terminal device, the report information to the network-side device; or in a case that a P-MPR of a currently used spatial object meets a preset condition, transmitting, by the terminal device, the report information to the network-side device.

6. The method according to claim 5, wherein the report information comprises the P-MPR of the currently used spatial object.

7. The method according to claim 1, wherein the report information comprises at least one of the following related information of the at least one spatial object: identification information of at least one RS resource corresponding to the at least one spatial object, P-MPR information of the at least one spatial object, a quality parameter of the at least one RS resource, a duty cycle corresponding to the at least one spatial object, and a reduction value of the quality parameter of the at least one RS resource.

8. The method according to claim 7, wherein
the at least one RS resource comprises a channel state information-reference signal CSI-RS resource and/or a synchronization signal and physical broadcast channel PBCH block SSB resource; and/or
the identification information of the RS resource comprises a CSI-RS resource index CRI and/or an SSB resource index SSBRI; and/or
the quality parameter of the RS resource comprises a layer 1-reference signal received power L1-RSRP and/or a layer 1-signal to interference plus noise ratio L1-SINR.

9. The method according to claim 7, wherein that the report information indicates the related information of the at least one spatial object comprises:
the report information comprises the identification information of the at least one RS resource, and the at least one spatial object is indicated by the identification information of the at least one RS resource, wherein the at least one spatial object is used for measuring the at least one RS resource, as configured by the network-side device; or
the related information that corresponds to the at least one spatial object and that is comprised in the report information is arranged in an arrangement order configured by the network-side device or predefined, to indicate the corresponding related information of the at least one spatial object, wherein the arrangement order is used for indicating an arrangement order for reporting the related information of the at least one spatial object of the terminal device.

10. The method according to claim 1, wherein the configuration by the network-side device comprises: forcing the terminal device to indicate the related information of the at least one spatial object when the terminal device reports the report information; or allowing the terminal device to indicate the related information of the at least one spatial object when the terminal device reports the report information.

11. The method according to any one of claims 1 to 8 and claim 10, wherein that the report information indicates the related information of the at least one spatial object comprises:
the report information comprises identification information of the at least one spatial object; or
based on a correspondence between uplink resources and identification information of spatial objects, the report information is transmitted by using an uplink resource corresponding to the at least one spatial object, to indicate identification information of the at least one spatial object.

12. The method according to any one of claims 1 to 10, wherein the transmitting, by a terminal device, report information to a network-side device comprises:
transmitting, by the terminal device depending on whether a first predetermined condition is met, the report information to the network-side device by using the currently used spatial object or another spatial object of the terminal device different from the currently used spatial object.

13. The method according to claim 12, wherein that whether a first predetermined condition is met comprises at least one of the following:
whether a quality parameter obtained by measuring a reference signal by using different spatial objects of the terminal device meets a second predetermined condition;
whether a link quality degradation value on the currently used spatial object meets a third predetermined condition within a predetermined time period;
whether a P-MPR of a spatial object of the terminal device meets a fourth predetermined condition;
whether uplink quality and downlink quality on the currently used spatial object meet a fifth predetermined condition; and
whether a movement speed of the terminal device meets a sixth predetermined condition.

14. The method according to claim 13, wherein that whether a P-MPR of a spatial object of the terminal device meets a fourth predetermined condition comprises one of the following:
whether the P-MPR of the spatial object currently used by the terminal device exceeds a first quality difference, wherein the first quality difference comprises a difference between beam link quality on the currently used spatial object and beam link quality on the another spatial object;
whether the P-MPR of the currently used spatial object exceeds a predetermined threshold within a predetermined time range; and
whether a P-MPR difference exceeds a second quality difference, wherein the P-MPR difference is a difference between the P-MPR of the currently used spatial object and a P-MPR of the another spatial object, and the second quality difference is a difference between beam link quality on the currently used spatial object and beam link quality on the another spatial object.

15. The method according to any one of claims 1 to 10, wherein
the transmitting, by a terminal device, report information to a network-side device comprises: transmitting, by the terminal device, the report information to the network-side device through a preset physical uplink control channel PUCCH and/or physical uplink shared channel PUSCH; and
after the transmitting, by a terminal device, report information to the network-side device, the method further comprises: monitoring, by the terminal device, downlink control information DCI fed back by the network-side device.

16. The method according to any one of claims 1 to 10, wherein
the transmitting, by a terminal device, report information to a network-side device comprises: transmitting, by the terminal device, the report information to the network-side device by using a media access control MAC control element CE; and
after the transmitting, by a terminal device, report information to the network-side device, the method further comprises: receiving, by the terminal device, acknowledgement information for the MAC CE fed back by the network-side device, or monitoring DCI fed back by the network-side device.

17. The method according to claim 16, wherein during uplink transmission scheduling, the same hybrid automatic repeat request HARQ process as that used by a PUSCH carrying the MAC CE is used for the DCI.

18. The method according to claim 16, wherein before the transmitting, by the terminal device, the report information to the network-side device by using a MAC CE, the method further comprises:
if no uplink grant is currently available, transmitting, by the terminal device, a resource scheduling request SR by using a spatial object of the terminal device, to request the network-side device to perform an uplink grant.

19. The method according to claim 16, wherein
after the transmitting, by the terminal device, the report information to the network-side device by using a MAC CE, the method further comprises: determining, by the terminal device, beam information of a physical downlink control channel PDCCH and a PUCCH within preset duration based on a target beam obtained by the terminal device through measurement, wherein the target beam is obtained by measuring a predetermined RS resource by using the at least one spatial object.

20. The method according to any one of claims 1 to 10, wherein
the transmitting, by a terminal device, report information to a network-side device comprises: transmitting, by the terminal device, the report information to the network-side device through a contention-free physical random access channel PRACH in a random access procedure; and
after the transmitting, by a terminal device, report information to the network-side device, the method further comprises: receiving, by the terminal device, a response message transmitted by the network-side device on a predetermined control resource set CORESET.

21. The method according to claim 20, wherein after the transmitting, by the terminal device, the report information to the network-side device through a contention-free PRACH, the method further comprises:
determining, by the terminal device, beam information of a PDCCH within preset duration and beam information of a physical downlink shared channel PDSCH within the preset duration based on a target beam obtained by the terminal device through measurement, and determining, based on beam information corresponding to the contention-free PRACH, beam information of a PUCCH within the preset duration, wherein the target beam is obtained by measuring a predetermined RS resource by using the at least one spatial object.

22. The method according to any one of claims 1 to 10, wherein
the transmitting, by a terminal device, report information to a network-side device comprises: transmitting, by the terminal device, the report information to the network-side device through a contention-based PRACH in a random access procedure; and
after the transmitting, by a terminal device, report information to the network-side device, the method further comprises: receiving, by the terminal device, a response message fed back by the network-side device in the random access procedure.

23. The method according to claim 22, wherein the transmitting, by the terminal device, the report information to the network-side device through a contention-based PRACH in a random access procedure comprises: carrying, by the terminal device, the report information in a predetermined message to be transmitted in the random access procedure.

24. The method according to claim 22, wherein after the transmitting, by the terminal device, the report information to the network-side device through a contention-based PRACH, the method further comprises: determining, by the terminal device, beam information of a PDCCH within preset duration, beam information of a PDSCH within the preset duration, and beam information of a PUCCH within the preset duration based on a synchronization signal and physical broadcast channel PBCH block SSB resource corresponding to the contention-based PRACH.

25. The method according to any one of claims 1 to 10, wherein
the transmitting, by a terminal device, report information to a network-side device comprises: transmitting, by the terminal device, the report information by using a message A MsgA in a 2-step random access channel procedure; and
after the transmitting, by a terminal device, report information to the network-side device, the method further comprises: monitoring, by the terminal device, a message B MsgB fed back by the network-side device in the 2-step random access channel procedure.

26. The method according to claim 25, wherein the transmitting, by the terminal device, the report information by using an MsgA in a 2-step random access channel procedure comprises: transmitting, by the terminal device, the report information by using a PUSCH in the MsgA.

27. The method according to claim 26, wherein after the transmitting, by the terminal device, the report information by using an MsgA in a 2-step random access channel procedure, the method further comprises: determining, by the terminal device, beam information of a PDCCH within preset duration and beam information of a PUCCH within the preset duration based on a target beam obtained by the terminal device through measurement or based on an SSB resource corresponding to the MsgA, wherein the target beam is obtained by measuring a predetermined RS resource by using the at least one spatial object.

28. The method according to any one of claims 1 to 10, wherein the at least one spatial object comprises a target spatial object to be switched to.

29. The method according to any one of claims 1 to 10, wherein the transmitting, by a terminal device, report information to a network-side device comprises:
transmitting, by the terminal device, the report information based on a preset format of a beam report.

30. The method according to claim 29, wherein the beam report comprises a signaling field that carries each piece of information comprised in the report information.

31. The method according to any one of claims 1 to 10, wherein after the transmitting, by a terminal device, report information to a network-side device, the method further comprises:
determining, by the terminal device, spatial relation information of a sounding reference signal SRS.

32. The method according to claim 31, wherein
the SRS is a semi-persistent SRS or an aperiodic SRS; and/or
the SRS is configured by the network-side device and has a correspondence with a plurality of spatial objects of the terminal device.

33. The method according to claim 32, wherein the determining, by the terminal device, spatial relation information of a sounding reference signal SRS comprises:
in a case that the report information comprises the identification information of the at least one RS resource, using, by the terminal device, a reference signal corresponding to a preset RS resource of the at least one RS resource as a source reference signal in the spatial relation information of the SRS, wherein the preset RS resource is an RS resource, of the at least one RS resource, that corresponds to a spatial object on which the SRS is located; or
if the network-side device has scheduled a channel on a spatial object on which the SRS is located, determining, by the terminal device, the spatial relation information of the SRS based on beam information of the channel on the spatial object on which the SRS is located.

34. A spatial object scheduling method, wherein the method comprises:
receiving, by a network-side device, report information transmitted by a terminal device, wherein the report information indicates related information of at least one spatial object of the terminal device; and
scheduling, by the network-side device, a spatial object of the terminal device based on the related information of the at least one spatial object that is indicated by the report information.

35. The method according to claim 34, wherein the spatial object comprises at least one of the following: an antenna panel and a beam on the antenna panel.

36. The method according to claim 35, wherein the report information comprises at least one of the following related information of the at least one spatial object: identification information of at least one RS resource corresponding to the at least one spatial object, P-MPR information of the at least one spatial object, a quality parameter of the at least one RS resource, a duty cycle corresponding to the at least one spatial object, and a reduction value of the quality parameter of the at least one RS resource.

37. The method according to claim 36, wherein
the at least one RS resource comprises a channel state information-reference signal CSI-RS resource and/or a synchronization signal and physical broadcast channel PBCH block SSB resource; and/or
the identification information of the RS resource comprises a CSI-RS resource index CRI and/or an SSB resource index SSBRI; and/or
the quality parameter of the RS resource comprises a layer 1-reference signal received power L1-RSRP and/or a layer 1-signal to interference plus noise ratio L1-SINR.

38. The method according to claim 37, wherein before the scheduling, by the network-side device, a spatial object of the terminal device, the method further comprises: determining, by the network-side device, the at least one spatial object in one of the following manners:
determining, by the network-side device based on preconfigured spatial objects for measuring predetermined RS resources, that the at least one spatial object is a spatial object corresponding to the at least one RS resource in the report information; and
determining, by the network-side device, spatial objects of the terminal device according to a preconfigured arrangement order for reporting related information corresponding to spatial objects of the terminal device and according to an arrangement order of the related information of the at least one spatial object in the report information.

39. The method according to claim 34, wherein before the scheduling, by the network-side device, a spatial object of the terminal device, the method further comprises: determining, by the network-side device, the at least one spatial object in one of the following manners:
determining, by the network-side device, the at least one spatial object based on identification information of the at least one spatial object that is comprised in the report information; and
determining, by the network-side device based on a preconfigured correspondence between uplink resources and spatial objects, that the at least one spatial object is a spatial object corresponding to an uplink resource for transmitting the report information.

40. The method according to any one of claims 34 to 39, wherein after the receiving, by a network-side device, report information transmitted by a terminal device, the method further comprises: transmitting, by the network-side device, response information to the terminal device.

41. The method according to claim 40, wherein
the receiving, by a network-side device, report information transmitted by a terminal device comprises: receiving, by the network-side device, the report information transmitted by the terminal device to the network-side device through a preset physical uplink control channel PUCCH and/or physical uplink shared channel PUSCH; and
the transmitting, by the network-side device, response information to the terminal device comprises: transmitting, by the network-side device, response DCI to the terminal device.

42. The method according to claim 40, wherein
the receiving, by a network-side device, report information transmitted by a terminal device comprises: receiving, by the network-side device, the report information transmitted by the terminal device to the network-side device by using a media access control MAC control element CE; and
the transmitting, by the network-side device, response information to the terminal device comprises: transmitting, by the network-side device, feedback acknowledgement information for the MAC CE to the terminal device; or transmitting, by the network-side device, response DCI to the terminal device.

43. The method according to claim 42, wherein during uplink transmission scheduling, the DCI uses the same hybrid automatic repeat request HARQ process as that used by a PUSCH carrying the MAC CE.

44. The method according to claim 42, wherein before the receiving, by a network-side device, report information transmitted by a terminal device, the method further comprises:
receiving, by the network-side device, a resource scheduling request SR transmitted by the terminal device, wherein the resource SR is to request the network-side device to perform an uplink grant; and
performing, by the network-side network, an uplink grant on the terminal device.

45. The method according to claim 42, wherein after the receiving, by a network-side device, report information transmitted by a terminal device, the method further comprises:
determining, by the network-side device based on a target beam obtained by the terminal device through measurement, beam information of a PDCCH corresponding to the terminal device within preset duration and beam information of a PUCCH corresponding to the terminal device within the preset duration, wherein the target beam is reported by the terminal device after measuring a predetermined RS resource by using the at least one spatial object.

46. The method according to claim 40, wherein
the receiving, by a network-side device, report information transmitted by a terminal device comprises: receiving, by the network-side device, the report information transmitted by the terminal device to the network-side device through a contention-free physical random access channel PRACH in a random access procedure; and
the transmitting, by the network-side device, response information to the terminal device comprises: transmitting, by the network-side device, the response information on a predetermined CORESET.

47. The method according to claim 46, wherein after the receiving, by a network-side device, report information transmitted by a terminal device, the method further comprises:
determining, by the network-side device based on a target beam obtained by the terminal device through measurement, beam information of a PDCCH corresponding to the terminal device within preset duration and beam information of a PDSCH corresponding to the terminal device within the preset duration, and determining, based on beam information corresponding to the contention-free PRACH, beam information of a PUCCH corresponding to the terminal device within the preset duration, wherein the target beam is reported by the terminal device by measuring a predetermined RS resource by using the at least one spatial object.

48. The method according to claim 40, wherein
the receiving, by a network-side device, report information transmitted by a terminal device comprises: receiving, by the network-side device, the report information transmitted by the terminal device to the network-side device through a contention-based PRACH in a random access procedure; and
the transmitting, by the network-side device, response information to the terminal device comprises: feeding back, by the network-side device, the response information to the terminal device in the random access procedure.

49. The method according to claim 48, wherein after the receiving, by a network-side device, report information transmitted by a terminal device, the method further comprises:
determining, by the network-side device based on a synchronization signal and physical broadcast channel PBCH block SSB resource corresponding to the contention-based PRACH, beam information of a PDCCH corresponding to the terminal device within preset duration, beam information of a PDSCH corresponding to the terminal device within the preset duration, and beam information of a PUCCH corresponding to the terminal device within the preset duration.

50. The method according to claim 40, wherein
the receiving, by a network-side device, report information transmitted by a terminal device comprises: receiving, by the network-side device, the report information transmitted by the terminal device by using a message A MsgA in a 2-step random access channel procedure; and
the transmitting, by the network-side device, response information to the terminal device comprises: transmitting, by the network-side device, an MsgB to the terminal device in the 2-step random access channel procedure, wherein the MsgB carries the response information.

51. The method according to claim 50, wherein after the receiving, by a network-side device, report information transmitted by a terminal device, the method further comprises:
determining, by the network-side device based on a target beam obtained by the terminal device through measurement or based on an SSB resource corresponding to the MsgA, beam information of a PDCCH corresponding to the terminal device within preset duration and beam information of a PUCCH corresponding to the terminal device within the preset duration, wherein the target beam is reported after a predetermined RS resource is measured by using the at least one spatial object.

52. The method according to any one of claims 34 to 39, wherein after the receiving, by a network-side device, report information transmitted by a terminal device, the method further comprises:
determining spatial relation information of an SRS of the terminal device.

53. The method according to claim 52, wherein the determining, by the network-side device, spatial relation information of an SRS of the terminal device comprises:
in a case that the report information comprises the identification information of the at least one RS resource, using, by the network-side device, a reference signal corresponding to a preset RS resource of the at least one RS resource as a source reference signal in the spatial relation information of the SRS, wherein the preset RS resource is an RS resource, of the at least one RS resource, that corresponds to a spatial object on which the SRS is located; or
if the network-side device has scheduled a channel on a spatial object on which the SRS is located, determining, by the network-side device, the spatial relation information of the SRS based on beam information of the channel on the spatial object on which the SRS is located.

54. The method according to any one of claims 34 to 39, wherein before the receiving, by a network-side device, report information transmitted by a terminal device, the method further comprises:
transmitting, by the network-side device, configuration information to the terminal device, wherein the configuration information comprises at least one of the following: a time parameter for the terminal device to transmit the report information, a reporting event, all information comprised in the report information, spatial objects for measuring predetermined RS resources, spatial objects using predetermined uplink resources, RS resources corresponding to spatial objects, and an arrangement order for reporting RS resources corresponding to spatial objects.

55. A terminal device, comprising:
a transmitting module, configured to transmit report information to a network-side device as defined in a protocol and/or as configured by the network-side device and/or in the case of detecting a reporting event, wherein the report information indicates related information of at least one spatial object of the terminal device.

56. The terminal device according to claim 55, wherein the spatial object comprises an antenna panel and/or a beam on the antenna panel.

57. The terminal device according to claim 55, wherein that the transmitting module transmits report information to a network-side device comprises at least one of the following:
transmitting the report information to the network-side device as defined in a protocol;
transmitting the report information to the network-side device according to an configuration of the network-side device; and
transmitting the report information to the network-side device in the case of detecting a reporting event.

58. The terminal device according to claim 57, wherein the reporting event comprises a beam failure event.

59. The terminal device according to claim 57, wherein that the transmitting module transmits report information to a network-side device comprises:
in a case that a condition defined in the protocol and/or configured by the network-side device is met, transmitting the report information to the network-side device; or in a case that a P-MPR of a currently used spatial object meets a preset condition, transmitting the report information to the network-side device.

60. The terminal device according to claim 59, wherein the report information comprises the P-MPR of the currently used spatial object.

61. The terminal device according to claim 57, wherein the report information comprises at least one of the following related information of the at least one spatial object: identification information of at least one RS resource corresponding to the at least one spatial object, P-MPR information of the at least one spatial object, a quality parameter of the at least one RS resource, a duty cycle corresponding to the at least one spatial object, and a reduction value of the quality parameter of the at least one RS resource.

62. The terminal device according to claim 61, wherein
the at least one RS resource comprises a channel state information-reference signal CSI-RS resource and/or a synchronization signal and physical broadcast channel PBCH block SSB resource; and/or
the identification information of the RS resource comprises a CSI-RS resource index CRI and/or an SSB resource index SSBRI; and/or
the quality parameter of the RS resource comprises a layer 1-reference signal received power L1-RSRP and/or a layer 1-signal to interference plus noise ratio L1-SINR.

63. The terminal device according to claim 61, wherein that the report information indicates the related information of the at least one spatial object comprises:
the report information comprises the identification information of the at least one RS resource, and the at least one spatial object is indicated by the identification information of the at least one RS resource, wherein the at least one spatial object is used for measuring the at least one RS resource, as configured by the network-side device; or
the related information that corresponds to the at least one spatial object and that is comprised in the report information is arranged in an arrangement order configured by the network-side device or predefined, to indicate the corresponding related information of the at least one spatial object, wherein the arrangement order is used for indicating an arrangement order for reporting the related information of the at least one spatial object of the terminal device.

64. The terminal device according to claim 57, wherein the configuration by the network-side device comprises: forcing the terminal device to indicate the related information of the at least one spatial object when the terminal device reports the report information; or allowing the terminal device to indicate the related information of the at least one spatial object when the terminal device reports the report information.

65. The terminal device according to any one of claims 55 to 62 and claim 64, wherein that the report information indicates the related information of the at least one spatial object comprises:
the report information comprises identification information of the at least one spatial object; or
based on a correspondence between uplink resources and identification information of spatial objects, the report information is transmitted by using an uplink resource corresponding to the at least one spatial object, to indicate identification information of the at least one spatial object.

66. The terminal device according to any one of claims 55 to 64, wherein that the transmitting module transmits report information to a network-side device comprises:
transmitting, depending on whether a first predetermined condition is met, the report information to the network-side device by using the currently used spatial object or another spatial object of the terminal device different from the spatial obj ect.

67. The terminal device according to claim 66, wherein that whether a first predetermined condition is met comprises at least one of the following:
whether a quality parameter obtained by measuring a reference signal by using different spatial objects of the terminal device meets a second predetermined condition;
whether a link quality degradation value on the currently used spatial object meets a third predetermined condition within a predetermined time period;
whether a P-MPR of a spatial object of the terminal device meets a fourth predetermined condition;
whether uplink quality and downlink quality on the currently used spatial object meet a fifth predetermined condition; and
whether a movement speed of the terminal device meets a sixth predetermined condition.

68. The terminal device according to claim 67, wherein that whether a P-MPR of a spatial object of the terminal device meets a fourth predetermined condition comprises one of the following:
whether the P-MPR of the spatial object currently used by the terminal device exceeds a first quality difference, wherein the first quality difference comprises a difference between beam link quality on the currently used spatial object and beam link quality on the another spatial object;
whether the P-MPR of the currently used spatial object exceeds a predetermined threshold within a predetermined time range; and
whether a P-MPR difference exceeds a second quality difference, wherein the P-MPR difference is a difference between the P-MPR of the currently used spatial object and a P-MPR of the another spatial object, and the second quality difference is a difference between beam link quality on the currently used spatial object and beam link quality on the another spatial object.

69. The terminal device according any one of claims 55 to 64, wherein
that the transmitting module transmits report information to a network-side device comprises: transmitting the report information to the network-side device through a preset physical uplink control channel PUCCH and/or physical uplink shared channel PUSCH; and
the terminal device further comprises a first monitoring module, configured to: after the report information is transmitted to the network-side device, monitor downlink control information DCI fed back by the network-side device.

70. The terminal device according any one of claims 55 to 64, wherein
that the transmitting module transmits report information to a network-side device comprises: transmitting the report information to the network-side device by using a media access control MAC control element CE; and
the terminal device further comprises a first receiving module, configured to: after the report information is transmitted to the network-side device, receive feedback acknowledgement information for the MAC CE from the network-side device, or monitor DCI fed back by the network-side device.

71. The terminal device according to claim 70, wherein during uplink transmission scheduling, the DCI uses the same hybrid automatic repeat request HARQ process as that used by a PUSCH carrying the MAC CE.

72. The terminal device according to claim 70, wherein the terminal device further comprises a request module, configured to: before the report information is transmitted to the network-side device by using the MAC CE, if no uplink grant is currently available, transmit a resource scheduling request SR by using a spatial object of the terminal device, to request the network-side devicenetwork-side device to perform an uplink grant.

73. The terminal device according to claim 70, wherein the first determining module is configured to: after the report information is transmitted to the network-side device by using the MAC CE, determine beam information of a physical downlink control channel PDCCH and a PUCCH within preset duration based on a target beam obtained by the terminal device through measurement, wherein the target beam is obtained by measuring a predetermined RS resource by using the at least one spatial object.

74. The terminal device according any one of claims 55 to 64, wherein
that the transmitting module transmits report information to a network-side device comprises: transmitting the report information to the network-side device through a contention-free physical random access channel PRACH in a random access procedure; and
the terminal device further comprises a second receiving module, configured to: after the report information is transmitted to the network-side device, receive a response message transmitted by the network-side device on a predetermined control resource set (CORESET).

75. The terminal device according to claim 74, wherein
the terminal device further comprises a second determining module, configured to: after the report information is transmitted to the network-side device through the contention-free PRACH, determine beam information of a PDCCH within preset duration and beam information of a PDSCH within the preset duration based on a target beam obtained by the terminal device through measurement, and determine, based on beam information corresponding to the contention-free PRACH, beam information of a PUCCH within the preset duration, wherein the target beam is obtained by measuring a predetermined RS resource by using the at least one spatial obj ect.

76. The terminal device according any one of claims 55 to 64, wherein
that the transmitting module transmits report information to a network-side device comprises: transmitting the report information to the network-side device through a contention-based PRACH in a random access procedure; and
the terminal device further comprises a third receiving module, configured to: after the report information is transmitted to the network-side device, receive a response message fed back by the network-side device in the random access procedure.

77. The terminal device according to claim 76, wherein
that the transmitting module transmits the report information to the network-side device through a contention-based PRACH in a random access procedure comprises: adding the report information to a predetermined message to be transmitted in the random access procedure.

78. The terminal device according to claim 76, wherein
the terminal device further comprises a third determining module, configured to: after the report information is transmitted to the network-side device through the contention-based PRACH, determine beam information of a PDCCH within preset duration, beam information of a PDSCH within the preset duration, and beam information of a PUCCH within the preset duration based on an SSB resource corresponding to the contention-based PRACH.

79. The terminal device according any one of claims 55 to 64, wherein
that the transmitting module transmits report information to a network-side device comprises: transmitting the report information by using an MsgA in a 2-step random access channel procedure; and
the terminal device further comprises a second monitoring module, configured to: after the report information is transmitted to the network-side device, monitor an MsgB fed back by the network-side device in the 2-step random access channel procedure.

80. The terminal device according to claim 79, wherein that the transmitting module transmits the report information by using an MsgA in a 2-step random access channel procedure comprises: transmitting the report information by using a PUSCH in the MsgA.

81. The terminal device according to claim 80, wherein the terminal device further comprises a fourth determining module, configured to: after the report information is transmitted by using the MsgA in the 2-step random access channel procedure, determine beam information of a PDCCH within preset duration and beam information of a PUCCH within the preset duration based on a target beam obtained by the terminal device through measurement or based on an SSB resource corresponding to the MsgA, wherein the target beam is obtained by measuring a predetermined RS resource by using the at least one spatial object.

82. The terminal device according to any one of claims 55 to 64, wherein the at least one spatial object comprises a target spatial object to be switched to.

83. The terminal device according to any one of claims 55 to 64, wherein that the transmitting module transmits report information to a network-side device comprises: transmitting the report information based on a preset format of a beam report.

84. The terminal device according to claim 83, wherein the beam report comprises a signaling field that carries each piece of information comprised in the report information.

85. The terminal device according to any one of claims 55 to 64, wherein the terminal device further comprises a fifth determining module, configured to: after the report information is transmitted to the network-side device, determine spatial relation information of a sounding reference signal SRS.

86. The terminal device according to claim 85, wherein the SRS is a semi-persistent SRS or an aperiodic SRS; and/or
the SRS is configured by the network-side device and has a correspondence with a plurality of spatial objects of the terminal device.

87. The terminal device according to claim 86, wherein that the fifth determining module is configured to determine spatial relation information of a sounding reference signal SRS comprises:
in a case that the report information comprises the identification information of the at least one RS resource, using a reference signal corresponding to a preset RS resource of the at least one RS resource as a source reference signal in the spatial relation information of the SRS, wherein the preset RS resource is an RS resource, of the at least one RS resource, that corresponds to a spatial object on which the SRS is located; or
if the network-side device has scheduled a channel on a spatial object on which the SRS is located, determining the spatial relation information of the SRS based on beam information of the channel on the spatial object on which the SRS is located.

88. A network-side device, comprising:
a receiving module, configured to receive report information transmitted by a terminal device, wherein the report information indicates related information of at least one spatial object of the terminal device; and
a scheduling module, configured to schedule a spatial object of the terminal device based on the related information of the at least one spatial object that is indicated by the report information.

89. The network-side device according to claim 88, wherein the spatial object comprises at least one of the following: an antenna panel and a beam on the antenna panel.

90. The network-side device according to claim 89, wherein the report information comprises at least one of the following related information of the at least one spatial object: identification information of at least one RS resource corresponding to the at least one spatial object, P-MPR information of the at least one spatial object, a quality parameter of the at least one RS resource, a duty cycle corresponding to the at least one spatial object, and a reduction value of the quality parameter of the at least one RS resource.

91. The network-side device according to claim 90, wherein
the at least one RS resource comprises a channel state information-reference signal CSI-RS resource and/or a synchronization signal and physical broadcast channel PBCH block SSB resource; and/or
the identification information of the RS resource comprises a CSI-RS resource index CRI and/or an SSB resource index SSBRI; and/or
the quality parameter of the RS resource comprises a layer 1-reference signal received power L1-RSRP and/or a layer 1-signal to interference plus noise ratio L1-SINR.

92. The network-side device according to claim 91, wherein
the network-side device further comprises a first determining module, configured to: before the spatial object of the terminal device is scheduled, determine the at least one spatial object in one of the following manners: determining, based on preconfigured spatial objects for measuring predetermined RS resources, that the at least one spatial object is a spatial object corresponding to the at least one RS resource in the report information; determining, based on a preconfigured correspondence between uplink resources and spatial objects, that the at least one spatial object is a spatial object corresponding to an uplink resource for transmitting the report information; and determining spatial objects of the terminal device according to a preconfigured arrangement order for reporting RS resources corresponding to spatial objects of the terminal device and according to an arrangement order of the identification information of the at least one RS resource in the report information.

93. The network-side device according to claim 88, wherein
the network-side device further comprises a seventh determining module, configured to: before the spatial object of the terminal device is scheduled, determine the at least one spatial object in one of the following manners: determining the at least one spatial object based on identification information of the at least one spatial object that is comprised in the report information; and determining, based on a preconfigured correspondence between uplink resources and spatial objects, that the at least one spatial object is a spatial object corresponding to an uplink resource for transmitting the report information.

94. The network-side device according to any one of claims 88 to 93, wherein
the network-side device further comprises a response module, configured to: after the report information transmitted by the terminal device is received, transmit response information to the terminal device.

95. The network-side device according to claim 94, wherein
the receiving module is configured to receive the report information transmitted by the terminal device to the network-side device through a preset physical uplink control channel PUCCH and/or physical uplink shared channel PUSCH; and
the response module is configured to transmit response DCI to the terminal device.

96. The network-side device according to claim 94, wherein
the receiving module is configured to receive the report information transmitted by the terminal device to the network-side device by using a media access control MAC control element CE; and
the response module is configured to transmit feedback acknowledgement information for the MAC CE to the terminal device, or transmit response DCI to the terminal device.

97. The network-side device according to claim 94, wherein during uplink transmission scheduling, the DCI uses the same hybrid automatic repeat request HARQ process as that used by a PUSCH carrying the MAC CE.

98. The network-side device according to claim 94, wherein
the receiving module is further configured to: before the report information transmitted by the terminal device is received, receive a resource scheduling request SR transmitted by the terminal device, wherein the resource SR is to request the network-side device to perform an uplink grant; and
the network-side device further comprises a grant module, configured to perform an uplink grant on the terminal device.

99. The network-side device according to claim 94, wherein the network-side device further comprises a second determining module, configured to: after the report information transmitted by the terminal device is received, determine, based on a target beam obtained by the terminal device through measurement, beam information of a PDCCH corresponding to the terminal device within preset duration and beam information of a PUCCH corresponding to the terminal device within the preset duration, wherein the target beam is reported by the terminal device after measuring a predetermined RS resource by using the at least one spatial object.

100. The network-side device according to claim 96, wherein
the receiving module is configured to receive the report information transmitted by the terminal device to the network-side device through a contention-free physical random access channel PRACH in a random access procedure; and
the response module is configured to transmit the response information on a predetermined CORESET.

101. The network-side device according to claim 100, wherein
the network-side device further comprises a third determining module, configured to: after the report information transmitted by the terminal device is received, determine, based on a target beam obtained by the terminal device through measurement, beam information of a PDCCH corresponding to the terminal device within preset duration and beam information of a PDSCH corresponding to the terminal device within the preset duration, and determine, based on beam information corresponding to the contention-free PRACH, beam information of a PUCCH corresponding to the terminal device within the preset duration, wherein the target beam is reported by the terminal device by measuring a predetermined RS resource by using the at least one spatial object.

102. The network-side device according to claim 94, wherein
the receiving module is configured to receive the report information transmitted by the terminal device to the network-side device through a contention-based PRACH in a random access procedure; and
the response module is configured to feed back the response information to the terminal device in the random access procedure.

103. The network-side device according to claim 102, wherein the network-side device further comprises a fourth determining module, configured to: after the report information transmitted by the terminal device is received, determine, based on an SSB resource corresponding to the contention-based PRACH, beam information of a PDCCH corresponding to the terminal device within preset duration, beam information of a PDSCH corresponding to the terminal device within the preset duration, and beam information of a PUCCH corresponding to the terminal device within the preset duration.

104. The network-side device according to claim 94, wherein
the receiving module is configured to receive the report information transmitted by the terminal device by using a message A MsgA in a 2-step random access channel procedure; and
the response module is configured to transmit an MsgB to the terminal device in the 2-step random access channel procedure, wherein the MsgB carries the response information.

105. The network-side device according to claim 104, wherein the network-side device further comprises a fifth determining module, configured to: after the report information transmitted by the terminal device is received, determine, based on a target beam obtained by the terminal device through measurement or based on an SSB resource corresponding to the MsgA, beam information of a PDCCH corresponding to the terminal device within preset duration and beam information of a PUCCH corresponding to the terminal device within the preset duration, wherein the target beam is reported after a predetermined RS resource is measured by using the at least one spatial object.

106. The network-side device according to any one of claims 88 to 93, wherein the network-side device further comprises a sixth determining module, configured to: after the report information transmitted by the terminal device is received, determine spatial relation information of an SRS of the terminal device.

107. The network-side device according to claim 106, wherein that the sixth determining module determines spatial relation information of an SRS of the terminal device comprises:
in a case that the report information comprises the identification information of the at least one RS resource, using a reference signal corresponding to a preset RS resource of the at least one RS resource as a source reference signal in the spatial relation information of the SRS, wherein the preset RS resource is an RS resource, of the at least one RS resource, that corresponds to a spatial object on which the SRS is located; or
if the network-side device has scheduled a channel on a spatial object on which the SRS is located, determining the spatial relation information of the SRS based on beam information of the channel on the spatial object on which the SRS is located.

108. The network-side device according to any one of claims 88 to 93, wherein the network-side device further comprises a transmitting module, configured to: before the report information transmitted by the terminal device is received, transmit configuration information to the terminal device, wherein the configuration information comprises at least one of the following: a time parameter for the terminal device to transmit the report information, a reporting event, all information comprised in the report information, spatial objects for measuring predetermined RS resources, spatial objects using predetermined uplink resources, RS resources corresponding to spatial objects, and an arrangement order for reporting RS resources corresponding to spatial objects.

109. A terminal device, comprising a memory, a processor, and a computer program stored in the memory and capable of running on the processor, wherein when the computer program is executed by the processor, the steps of the method according to any one of claims 1 to 33 are implemented.

110. A network-side device, comprising a memory, a processor, and a computer program stored in the memory and capable of running on the processor, wherein when the computer program is executed by the processor, the steps of the method according to any one of claims 34 to 54 are implemented.

111. A computer-readable storage medium, wherein the computer-readable storage medium stores a computer program, and when the computer program is executed by a processor,
the steps of the method according to any one of claims 1 to 33 are implemented; or
the steps of the method according to any one of claims 34 to 54 are implemented.

112. A computer program product, wherein the computer program product is executed by at least one processor to implement the method according to any one of claims 1 to 33, or
the method according to any one of claims 34 to 54.

113. An information reporting apparatus, wherein the information reporting apparatus is configured to perform the information reporting method according to any one of claims 1 to 33.

114. A spatial object scheduling apparatus, wherein the spatial object scheduling apparatus is configured to perform the spatial object scheduling method according to any one of claims 34 to 54.
